(19) Europäisches Patentamt
European Patent Office
Office européen des brevets

(11) **EP 4 465 710 A1**

(12) **EUROPEAN PATENT APPLICATION**
published in accordance with Art. 153(4) EPC

(43) Date of publication:
**20.11.2024 Bulletin 2024/47**

(21) Application number: **23753183.5**

(22) Date of filing: **09.02.2023**

(51) International Patent Classification (IPC):
*H04W 60/02* (2009.01)    *H04W 8/08* (2009.01)
*H04W 76/10* (2018.01)    *H04W 68/02* (2009.01)
*H04W 84/06* (2009.01)    *H04W 24/02* (2009.01)
*H04L 41/147* (2022.01)

(52) Cooperative Patent Classification (CPC):
**H04L 41/147; H04W 8/08; H04W 24/02;
H04W 60/02; H04W 68/02; H04W 76/10;
H04W 84/06**

(86) International application number:
**PCT/KR2023/001922**

(87) International publication number:
**WO 2023/153836 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2022 KR 20220017008**

(71) Applicant: **Samsung Electronics Co., Ltd.
Gyeonggi-do, 16677 (KR)**

(72) Inventors:
• **KIM, Dongyeon**
  **Suwon-si Gyeonggi-do 16677 (KR)**
• **BAEK, Youngkyo**
  **Suwon-si Gyeonggi-do 16677 (KR)**

(74) Representative: **HGF
HGF Limited
1 City Walk
Leeds LS11 9DX (GB)**

(54) **METHOD AND DEVICE FOR MANAGING REGISTRATION AND CONNECTION OF TERMINAL IN WIRELESS COMMUNICATION SYSTEM**

(57)    The disclosure relates to a 5G or 6G communication system for supporting a higher data transmission rate. In a wireless communication system, a method performed by an access mobility and management function (AMF) node may comprise the steps of: receiving, from a radio access network (RAN) node, an N2 message including a request to register a terminal and information on a satellite used by the terminal; receiving, from a network data analytics function (NWDAF) node, information on the mobility of the terminal; determining a periodic registration update timer value on the basis of the N2 massage and the information on the mobility of the terminal; and transmitting the periodic registration update timer value to the terminal.

**(Cont. next page)**

| UE | (R)AN | AMF | UDM | SMF | UPF | NWDAF | NEF | AF | DN |
|----|-------|-----|-----|-----|-----|-------|-----|-----|-----|

1. Registration request

2. Generate satellite coverage information (e.g., active duration= 20 minutes, inactive duration=10 hours)

3. N2 message (N2 parameter (satellite coverage information) and registration request)

4. Determine RAT type (e.g., NR satellite (LEO), NR satellite (MEO), NR satellite (GEO), NR satellite (OTHERSAT), etc.)

5. SDM subscription request (SUPI)

6. Determine, based on satellite coverage information and/or UE-related information (e.g., UE behavior characteristic, UE mobility analytics, etc.), periodic registration update timer value

7. Registration acceptance (registration area and periodic registration update timer)

UE behavior characteristic parameter transferring procedure

NG-RAN location reporting procedure
8. Control location reporting

9. Location report (UE location broadcast TAI list, TAI in which UE is geographically located, and last visited TAI)

10a. AF receives UE mobility analytics (satellite coverage area and/or last visited satellite service area) from NWDAF and performs subscription

10b. AF verifies received data and generates UE behavior characteristic parameter (satellite coverage area and/or last visited satellite service area)

11. Parameter provisioning generation/updating/deletion request (UE behavior characteristic parameter)

12. Parameter provisioning generation/updating/deletion response

13. Notify of SDM notification (SUPI and AMF assistive UE behavior characteristic parameter)

UE mobility analytics transferring procedure

14. Subscribe to analytics subscription service (e.g., type of analytics=UE mobility analytics, target of analytics=UE ID and/or UE group ID, and analytics filter information=satellite coverage area and/or last visited satellite service area)

15. Notify of analytics subscription (UE mobility analytics in satellite coverage area and/or last visited satellite service area)

16. Determine, based on satellite coverage information and/or UE-related information (e.g., UE behavior characteristic, UE mobility analytics, etc.), updating of periodic registration update timer value

FIG.6A

**Description**

[Technical Field]

The disclosure relates to a method and a device for managing registration and connection of a terminal in a wireless communication system.

Specifically, the disclosure relates to a method and a device for managing registration and connection of a terminal when satellite cell coverage moves over time in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as sensing technologies, wired/wireless communication and network infrastructures, service interface technologies, and security technologies, may be required for IoT implementation. Recently, a sensor network, a machine-to-machine (M2M) communication, machine type communication (MTC), and so forth have been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine-to-machine (M2M) communication, machine type communication (MTC) may be implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

As satellite communication technology is advanced, efforts are being made to integrate satellite communication technology, which has been only limitedly introduced, into a mobile communication network. Specifically, in the 3rd generation partnership project (3GPP), standardization for schemes of enabling a UE to be connected to a network (e.g., a 5G core network) through a satellite access network (satellite RAN) is in progress.

[Disclosure of Invention]

[Technical Problem]

In the disclosure, a method for efficiently managing registration and connection of a UE in consideration of a satellite access coverage characteristic, UE mobility, a 5GC area management characteristic, a data characteristic, and a satellite access radio capability in a wireless communication system in which satellite cell coverage moves over time.

[Solution to Problem]

According to various embodiments of the disclosure, a method performed by an access mobility and management function (AMF) node in a wireless communication system may include receiving, from a radio access network (RAN) node, an N2 message including a request to register a terminal and information on a satellite used by the terminal, receiving, from a network data analytics function (NWDAF) node, information on mobility of the terminal, determining, based on the N2 massage and the information on the mobility of the terminal, a periodic registration update timer value, and transmitting the periodic registration update timer value to the terminal.

According to various embodiments of the disclosure, an access mobility and management function (AMF) mode in a wireless communication system may include a controller configured to receive, from a radio access network (RAN) node, an N2 message including a request to register a terminal and information on a satellite used by the terminal, receive, from a network data analytics function (NWDAF) node, information on mobility of the terminal, determine, based on the N2 massage and the information on the mobility of the terminal, a periodic registration update timer value and transmit the periodic registration update timer value to the terminal.

[Advantageous Effects]

Embodiments of the disclosure may provide a device and a method for managing registration and connection of a UE to effectively provide a service in a wireless communication system in which satellite cell coverage moves over time.

Advantageous effects obtainable from the present disclosure may not be limited to the effects mentioned in various embodiments of the disclosure, and other effects which are not mentioned may be clearly understood from the following descriptions by those skilled in the art to which the present disclosure pertains.

[Description of Drawings]

FIG. 1 illustrates a communication network including core network entities in a wireless communication system according to various embodiments of the disclosure.
FIG. 2A illustrates a configuration of a UE in a wireless communication system according to various embodiments of the disclosure.
FIG. 2B illustrates a configuration of a core network entity in a wireless communication system according to various embodiments of the disclosure.
FIG. 3A illustrates an interface and a data collection structure in a wireless communication system according to various embodiments of the disclosure.
FIG. 3B illustrates an interface and a network data analytics exposure structure in a wireless communication system according to various embodiments of the disclosure.
FIG. 4 illustrates a network structure of a wireless communication system using satellite access in a wireless communication system according to various embodiments of the disclosure.
FIG. 5 illustrates a method for area management according to movement of satellite cell coverage in a wireless communication system according to various embodiments of the disclosure.
FIGS. 6A and 6B illustrate a flow of signals for managing registration and connection of a UE in consideration of UE mobility and satellite coverage in a wireless communication system according to various embodiments of the disclosure.
FIGS. 7A and 7B illustrate a flow of signals for managing registration and connection of a UE in consideration of a location of the UE in a wireless communication system according to various embodiments of the disclosure.
FIGS. 8A and 8B illustrate a flow of signals for managing registration and connection of a UE in consideration of a beam control capability in a wireless communication system according to various embodiments of the disclosure.

[Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.
In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards.
Satellite radio access covers a relatively wider area than terrestrial radio access, and thus the number of user equipments (UEs) communication with a 5G core network also increases. In this case, satellite radio access coverage moves upon movement of a satellite, and UEs may temporarily lose connection from a 5GC. For the UEs having lost the connection, satellite coverage can return after a predetermined cycle, but the UEs are de-registered from a 5G core network (5GC). When the satellite coverage returns, the UEs may request registration and connection from the 5GC again, and the 5GC may perform a required operation and transmit a signal to the UEs. A periodic characteristic of the satellite is not considered, and thus the above-described operations may be continuously repeated. As the above-described operations are repeated, the efficiency of resource use of a radio access period, the 5GC, and the UE may be decreased. The disclosure provides a method for efficiently managing registration and connection of the UE in consideration of a satellite access coverage characteristic, UE mobility, a 5GC area management characteristic, a data characteristic, and a satellite access radio capability in a wireless communication system in which satellite cell coverage moves over time.

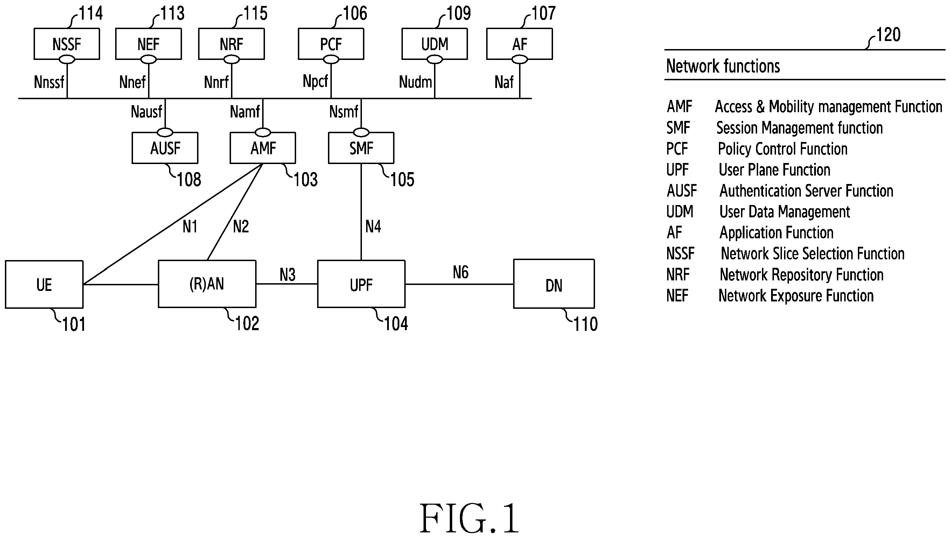

FIG. 1 illustrates a communication network including core network entities in a wireless communication system according to various embodiments of the disclosure. Specifically, referring to FIG. 1, a network entity included in a network structure of a wireless communication system may include a network function (NF) according to system implementation.
Referring to FIG. 1, a network structure of a wireless communication system 100 may include various network entities. The wireless communication system 100 may include an authentication server function (AUSF) 108, a (core) access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, an edge application service domain repository (EDR) (not shown), an edge application server (EAS) (not shown), an EAS discovery function (EASDF) (not shown), a network data analytics function (NWDAF) (not shown), a user plane function (UPF) 104, a (radio) access network ((R)AN) 102, and a terminal, i.e., a user equipment (UE) 101.

Each of the NFs of the wireless communication system 100 may support functions below.

The AUSF 108 may process and store data for authentication of the UE 101.

The AMF 103 may provide an access and mobility management function in units of UEs, and may be basically connected to one AMF per UE. Specifically, the AMF 103 supports functions, such as signaling between core network (CN) nodes for mobility between 3GPP access networks, termination of the radio access network (RAN) central plane (CP) interface (e.g., N2 interface), termination of non-access stratum (NAS) signaling (N1 interface), NAS signaling security (NAS ciphering and integrity protection), AS security control, registration management (registration area management), connection management, idle mode UE reachability (for example, including control and execution of paging retransmission), mobility management control (subscription and policy), support of intra-system mobility and inter-system mobility, support of network slicing, SMF selection, lawful intercept (for AMF event and L1 system interface), session management (SM) message delivery between the UE and the SMF, transparent proxy for routing SM messages, access authentication, access authorization including roaming authority check, delivery of short message service (SMS) messages between the UE and a short message service function (SMSF), a security anchor function (SAF), and/or security context management (SCM). Some or all of these functions of the AMF 103 can be supported in a single instance of one AMF.

The DN 110 may mean, for example, an operator service, Internet access, a 3$^{rd}$ party service, or the like. The DN 110 may transmit a downlink protocol data unit (PDU) to the UPF 104 or may receive a PDU transmitted from the UE 101 through the UPF 104.

The PCF 106 may provide a function of receiving information on the packet flow from an application server and determining policies for mobility management, session management, and the like. Specifically, the PCF 106 may support functions, such as supporting a unified policy framework for controlling a network operation, providing policy rules so that the control plane function(s) (e.g., AMF, SMF) can enforce the policy rules, and implementing a front end to access relevant subscription information for policy determination in a user data repository (UDR).

The SMF 105 may provide a session management function. When the UE has multiple sessions, the UE may be managed by different SMFs for each session. Specifically, the SMF 105 may support functions, such as session management (e.g., session establishment, modification, and release, including tunnel maintenance between the UPF 104 and the (R)AN 102 node), UE Internet protocol (IP) address allocation and management (including selective authentication), selection and control of a UP function, configuring traffic steering to route traffic to the appropriate destination in the UPF 104, termination of interfaces toward policy control functions, enforcing the control part of the policy and quality of service (QoS), lawful intercept (LI) (e.g., lawful intercept for the interface to the L1 system and the SM event), termination of the SM part of NAS messages, downlink data notification, initiator of AN-specific SM information (e.g., transferred to the (R)AN 102 via the AMF 103 over N2), determining SSC mode of the session, and roaming functionality. Some or all functions of the SMF 105 may be supported in a single instance of one SMF.

The UDM 109 may store user subscription data, policy data, and the like. The UDM 109 may include two parts, for example, an application front end (FE) (not shown) and a user data repository (UDR) (not shown).

The front end (FE) may include a UDM-FE taking charge of location management, subscription management, processing of credentials, etc., and a PCF taking charge of policy control. The UDR may store data required for functions provided by the UDM-FE and a policy profile required by the PCF. Data stored in the UDR may include user subscription data including a subscription identifier, security credentials, access and mobility related subscription data, and session related subscription data, and policy data. The UDM-FE may access subscription information stored in the UDR and may support functions such as authentication credential processing, user identification handling, access authentication, registration/mobility management, subscription management, and SMS management.

The UPF 104 may transfer a downlink PDU received from the DN 110 to the UE 101 via the (R)AN 102. The UPF 104 may transfer an uplink PDU received via the (R)AN 102 from the UE 101 to the DN 110. Specifically, the UPF 104 may support functions, such as an anchor point for intra/inter radio access technology (RAT) mobility, an external PDU session point of interconnect to a data network, packet routing and forwarding, packet inspection and user plane part of policy rule enforcement, lawful intercept, traffic usage reporting, an uplink classifier to support traffic flow routing toward a data network, a branching point to support a multi-homed PDU session, QoS handling for user plane (e.g., packet filtering, gating, and uplink/downlink rate enforcement), uplink traffic verification (mapping between the service data flow (SDF) and the QoS flow), transport level packet marking in uplink and downlink, and downlink packet buffering and downlink data notification triggering. Some or all functions of the UPF 104 may be supported in a single instance of one UPF.

The AF 107 may interact with the 3GPP core network to provide services (e.g., support functions including access to application influence on traffic routing and network capability exposure, and interaction with a policy framework for policy control).

**EP 4 465 710 A1**

The (R)AN 102 may collectively refer to new radio access networks supporting both evolved-universal mobile telecommunication system (UMTS) terrestrial radio access network (E-UTRA) being an evolved version of 4G radio access technology and new radio (NR) access technology (e.g., gNB).

The gNB may support functions for radio resource management (e.g., radio bearer control, radio admission control, connection mobility control, dynamic allocation of resources to the UE in uplink/downlink (i.e., scheduling)), and functions of Internet protocol (IP) header compression and encryption and integrity protection of user data streams. The gNB may support functions, such as selection of the AMF upon attachment of the UE if routing toward the AMF is not determined based on information provided to the UE, routing of user plane data toward UPF(s), routing of control plane information toward the AMF, connection setup and release, scheduling and transmission of paging messages (generated from the AMF), scheduling and transmission of system broadcast information (for example, information generated from the AMF or operating and maintenance (O&M)), configuration of measurement and measurement reporting for mobility and scheduling, transport level packet marking in the uplink, session management, support of network slicing, QoS flow management and mapping to a data radio bearer, support of the UE in an inactive mode, an NAS message distribution function, an NAS node selection function, radio access network sharing, dual connectivity, and tight interworking between the NR and the E-UTRA.

The UE 101 means a user equipment. The user equipment may be referred to as a term such as a terminal, a mobile equipment (ME), and a mobile station (MS). In addition, the user equipment may be a portable device such as a laptop computer, a mobile phone, a personal digital assistant (PDA), a smartphone, and a multimedia device, or a non-portable device such as a personal computer (PC) and a vehicle-mounted device.

The NEF 111 may provide a means to securely expose services and capabilities provided by 3GPP network functions for, e.g., 3rd party, internal exposure/re-exposure, application function, and edge computing. The NEF 111 may receive information from other NF(s). The information received by the NEF 111 may be information based on exposed capabilities of other network function(s). The NEF 111 may store the received information as structured data by using a standardized interface to a data storage network function. The stored information can be re-exposed by the NEF 111 to other NF(s) and AF(s), and can be used for other purposes such as analytics.

The NRF 115 may support a service discovery function. The NRF 115 may receive an NF discovery request from an NF instance, and provide the NF instance with information on the discovered NF instance. In addition, the NRF 115 may maintain available NF instances and the services supported by the NF instances.

For convenience of description, FIG. 1 illustrates a reference model for a case where the UE 101 access one DN 110 by using one PDU session, but the disclosure is not limited thereto. According to various embodiments of the disclosure, the UE 101 may simultaneously access two data networks (e.g., a local network and a central network) by using multiple PDU sessions. In this case, two SMFs may be selected for different PDU sessions. However, each SMF may have a capability of controlling both a local UPF and a central UPF within a PDU session.

According to various embodiments of the disclosure, the UE 101 may simultaneously access two data networks (e.g., a local network and a central network) provided within a single PDU session.

The NSSF 114 may select a set of network slice instances serving the UE 101. The NSSF 114 may determine allowed network slice selection assistance information (NSSAI). If necessary, the NSSF 114 may perform mapping to subscribed single-network slice selection assistance information (S-NSSAI). In addition, the NSSF 114 may determine configured NSSAI. If necessary, the NSSF 114 may perform mapping to the subscribed S-NSSAI. In addition, the NSSF 114 may determine an AMF set used to service the UE, or determine a list of candidate AMFs by enquiring of the NRF 115 according to the configuration.

The NRF 115 may support a service discovery function. The NRF 115 may receive an NF discovery request from an NF instance, and provide the NF instance with information on the discovered NF instance. In addition, the NRF 115 may maintain available NF instances and the services supported by the NF instances.

In the 3GPP system, a conceptual link between the NFs in the radio communication system is defined as a reference point. Below illustrates reference points included in the radio communication system architecture illustrated in FIGS. 1 to 8. According to various embodiments of the disclosure, the reference point may be referred to as an interface.

- N1: Reference point between UE and AMF
- N2: Reference point between (R)AN and AMF
- N3: Reference point between (R)AN and UPF
- N4: Reference point between SMF and UPF
- N5: Reference point between PCF and AF
- N6: Reference point between UPF and data network
- N7: Reference point between SMF and PCF
- N8: Reference point between UDM and AMF
- N9: Reference point between two core UPFs
- N10: Reference point between UDM and SMF

- N11: Reference point between AMF and SMF
- N12: Reference point between AMF and AUSF
- N13: Reference point between UDM and authentication server function (AUSF)
- N14: Reference point between two AMFs
- N15: Reference point between PCF and AMF in case of a non-roaming scenario, reference point between PCF in visited network and AMF in case of a roaming scenario
- N23: Reference point between PCF and NWDAF
- N34: Reference point between NSSF and NWDAF

Hereinafter, the terminal may mean the UE 101, and the UE and the terminal may be interchangeably used. In this case, unless specifically and additionally defined, the terminal needs to be understood as the UE 101.

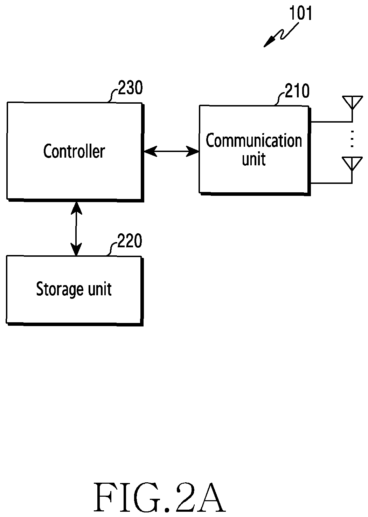

FIG. 2A illustrates a configuration of a UE in a wireless communication system according to various embodiments of the disclosure. The configuration illustrated in FIG. 2A may be understood as a configuration of the UE 101. The term "-unit", "-or(er)", or the like used below denotes a unit for processing at least one function or operation, and may be implemented by hardware, software, or a combination thereof.

Referring to FIG. 2A, the UE includes a communication unit 210, a storage unit 220, and a controller 230.

The communication unit 210 performs functions for transmitting and receiving signals through a wireless channel. For example, the communication unit 210 performs a function of transformation between a baseband signal and a bit stream depending on the physical layer specification of a system. For example, in the case of data transmission, the communication unit 210 generates complex symbols by encoding and modulating a transmission bit stream. In the case of data reception, the communication unit 210 restores a reception bit stream by demodulating and decoding a baseband signal. In addition, the communication unit 210 up-converts a baseband signal to an RF band signal to transmit the same through an antenna, and down-converts an RF band signal received through an antenna to a baseband signal. For example, the communication unit 210 may include a transmitting filter, a receiving filter, an amplifier, a mixer, an oscillator, a DAC, an ADC, and the like.

In addition, the communication unit 210 may include multiple transmission/reception paths. Furthermore, the communication unit 210 may include at least one antenna array including multiple antenna elements. In terms of hardware, the communication unit 210 may include a digital circuit and an analog circuit (e.g., a radio frequency integrated circuit (RFIC)). Here, the digital circuit and the analog circuit may be implemented as a single package. In addition, the communication unit 210 may also include multiple RF chains. Furthermore, the communication unit 210 may perform beamforming.

The communication unit 210 transmits and receives signals as described above. Accordingly, all or a part of the communication unit 210 may be referred to as a "transmitter", a "receiver", or a "transceiver". In addition, in the following description, the transmission and reception performed through a wireless channel is used to encompass the execution of the processing by the communication unit 210 as described above.

The storage unit 220 stores data such as fundamental programs, application programs, and configuration information for the operation of the UE. The storage unit 220 may be configured as a volatile memory, a non-volatile memory, or a combination thereof. The storage unit 220 provides stored data upon request by the controller 230.

The controller 230 controls overall operation of the UE. For example, the controller 230 transmits and receives signals through the communication unit 210. In addition, the controller 220 records and reads data in and from the storage unit 220. The controller 230 may perform functions of the protocol stack required by the communication standard. To this end, the controller 230 may include at least one of a processor or a microprocessor, or may be a part of the processor. In addition, a part of the communication unit 210 and the controller 230 may be referred to as a "communication processor (CP)". According to various embodiments, the controller 230 may perform control to perform synchronization using a wireless communication network. For example, the controller 230 may control the UE to perform operations according to various embodiments below.

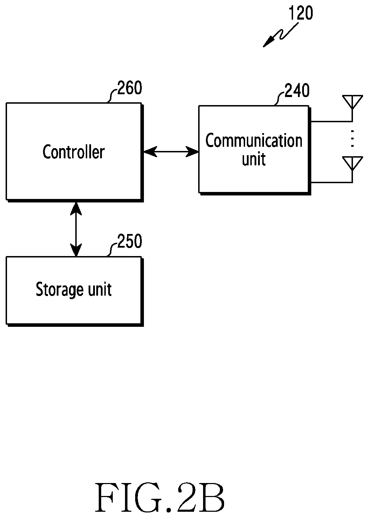

FIG. 2B illustrates a configuration of a core network entity 120 in a wireless communication system according to various embodiments of the disclosure. The configuration illustrated in FIG. 2B may be understood as a configuration of a device having at least one of functions 102 to 109 of FIG. 1. The term "-unit", "-or(er)", or the like used below denotes a unit for processing at least one function or operation, and may be implemented by hardware, software, or a combination thereof.

Referring to FIG. 2B, the core network entity includes a communication unit 240, a storage unit 250, and a controller 260.

The communication unit 240 provides an interface for performing communication with other devices in a network. That is, the communication unit 240 converts a bit stream transmitted from the core network entity to another device into a physical signal, and converts a physical signal received from another device into a bit stream. That is, the communication unit 240 may transmit and receive signals. Accordingly, the communication unit 240 may be referred to as a modem, a transmitter, a receiver, or a transceiver. In this case, the communication unit 240 may allow the core network entity to communicate with other devices or systems through backhaul connection (e.g., wired backhaul or wireless backhaul) or through a network.

The storage unit 250 stores data such as fundamental programs, application programs, and configuration information for the operation of the core network entity. The storage unit 250 may be configured as a volatile memory, a non-volatile memory, or a combination thereof. The storage unit 250 provides stored data upon request by the controller 230.

The controller 260 controls overall operation of the core network entity. For example, the controller 260 transmits and receives signals through the communication unit 240. In addition, the controller 260 records and reads data in and from the storage unit 250. To this end, the controller 260 may include at least one of a processor. According to various embodiments of the disclosure, the controller 260 may perform control to perform synchronization using a wireless communication network. For example, the controller 260 may control the core network entity to perform operations according to various embodiments below.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in 5GS and NR standards, which are the latest standards specified by the 3GPP group among the existing communication standards, will be used for the sake of descriptive convenience. However, the disclosure is not limited by these terms and names, and may be applied in the same way to systems that conform other standards. In particular, the disclosure may be applied to the 3GPP 5th generation mobile communication standards (e.g., 5GS and NR).

The network and the core network included in embodiments of the disclosure may correspond to a concept including a network device. A mobility management device (or a mobility management function), a location management device (or a location management function), a gateway mobile location center, and the like may be configured as separate devices, respectively, or may be configured to be included in a network device.

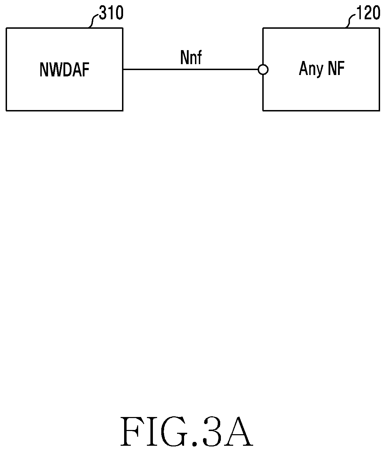

FIG. 3A illustrates an interface and a data collection structure in a wireless communication system according to various embodiments of the disclosure.

Referring to FIG. 3A, in a wireless communication system structure, an NWDAF may collect data from any NF included in a 5GC. In this case, the NWDAF and a 5GC NF for providing data need to belong to the same public land mobile network (PLMN).

An Nnf reference point may be used between the NWDAF and the 5GC NF. The NWDAF may use an Nnf interface to request subscription to data transmission for a specific context, unsubscribe the data transmission, or request a specific report of data for the specific context.

In the wireless communication system structure, the NWDAF may acquire management data from operation administration maintenance (OAM) by invoking an OAM service.

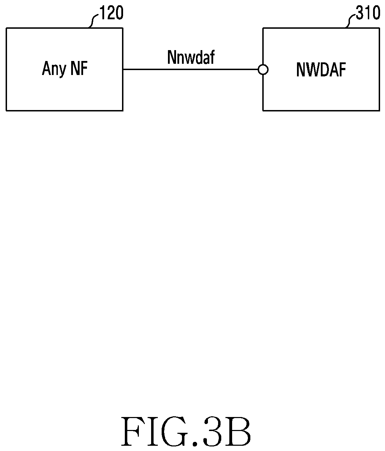

FIG. 3B illustrates an interface and a network data analytics exposure structure in a wireless communication system according to various embodiments of the disclosure.

Referring to FIG. 3B, in a wireless communication system structure, any 5GC NF may request network analytics information from the NWDAF including an analytics logical function (AnLF). In this case, the NWDAF and the 5GC NF for consuming the analytics information need to be belong to the same PLMN.

An Nnwdaf reference point may be used between the NWDAF and the 5GC NF. The NWDAF may use an Nnwdaf interface to request subscription to network analytics transmission for a specific context, unsubscribe the network analytics transmission, or request a specific report of network analytics for the specific context.

In the wireless communication system structure, a consumer (e.g., OAM and a charging enablement function (CEF)) other than the 5GC NF may request network analytics information from the NWDAF.

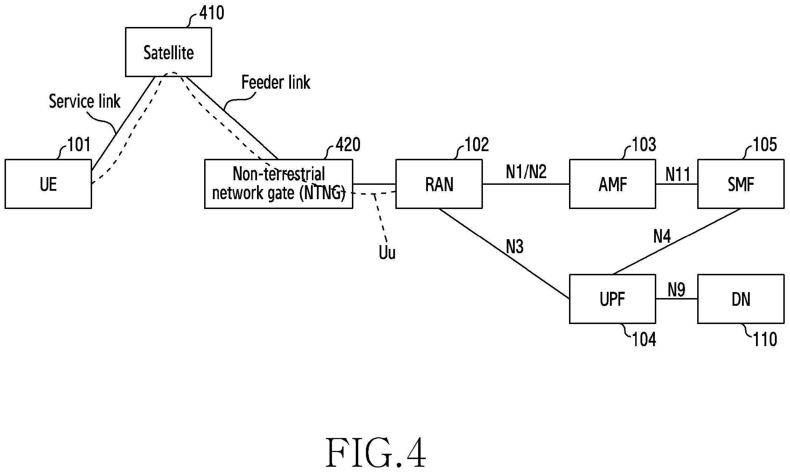

FIG. 4 illustrates a network structure of a wireless communication system using satellite access in a wireless communication system according to various embodiments of the disclosure.

Referring to FIG. 4, a UE 101 may access a RAN 102 through satellite access 410. More specifically, there may be a non-terrestrial network gateway (NTN gateway) 420 between the satellite access 410 and the RAN 102. A link between the UE 101 and the satellite access 410 may be referred to as a service link. A link between the satellite access 410 and the NTN gateway 420 may be referred to as a feeder link.

When the UE 101 accesses the RAN 102 through the satellite access 410, a Uu interface may be used between the UE 101 and the RAN 102. In addition, when the UE 101 is connected to an AMF 103 through the RAN 102 by using the satellite access 410, an N1 interface may be used between the UE 101 and the AMF 103, and an N2 interface may be used between the RAN 102 and the AMF 103.

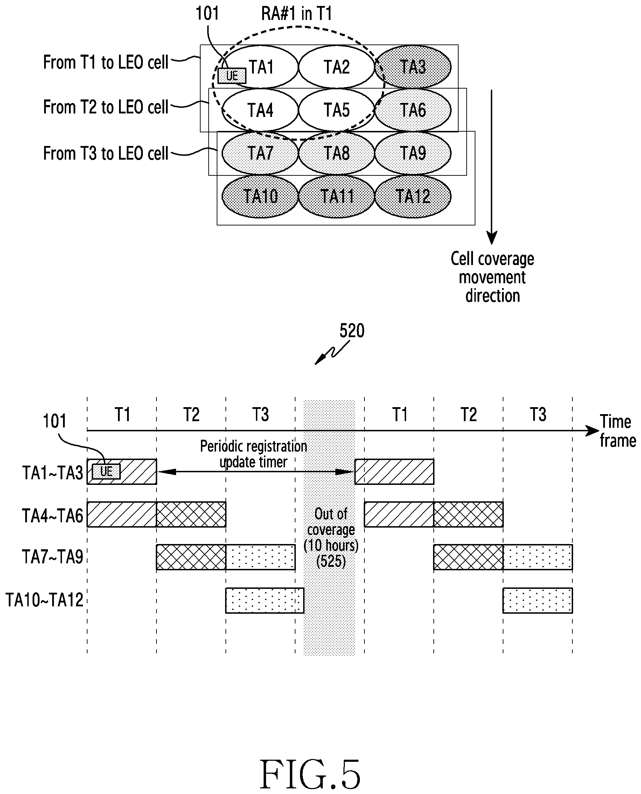

FIG. 5 illustrates a method for area management according to movement of satellite cell coverage in a wireless communication system according to various embodiments of the disclosure.

Referring to FIG. 5, the satellite cell coverage may move over time. For example, the satellite access in the wireless communication system may use parameters indicating a time duration (e.g., a satellite active duration) covering a specific area of a region on the earth and a time duration (e.g., a satellite inactive duration) taken until the satellite revolves around the earth and covers again a specific area of a region on the earth. For example, for the satellite access having about a 10-hour orbit in the wireless communication system, an area on the earth, which can be covered for about 20 minutes, may be defined as a cell coverage area. In this case, the satellite active duration may be configured to be 20 minutes, and the satellite inactive duration may be configured to be 10 hours. In addition, in the wireless communication system, one satellite cell coverage may be configured to cover one or more tracking areas (TAs). In addition, in the wireless communication system, a registration area may be configured to include one or more tracking areas. The tracking area may correspond to a unit in which the 5GC manages mobility of the UE in the wireless communication system. The RA may correspond to a unit in which the 5GC manages a registration state of the UE in the 5G system. However, according to various embodiments of the disclosure, the 5G system or the 5GC described below is not limited thereto, and may be applied to the overall wireless communication system.

Referring to FIG. 5, the satellite cell coverage may cover TA1 to TA6 during time duration T1, TA4 to TA4 to TA9 during time duration T2, TA7 to T12 during time duration T3 of the area on the earth 510. When the UE is located in TA1 and accesses the 5GC during time duration T1, the 5GC may determine an RA by including TA1 therein. The RA may be all or part of the satellite cell coverage of time duration T1. FIG. 5 illustrates only a low earth orbit (LEO) cell as a satellite cell, but the disclosure is not limited thereto, and various satellite cells including a middle earth orbit (MEO) and a geostationary orbit (GEO) may be included. When the UE enters time duration T2 while being located in TA1, the 5GC may determine a registration management state and a connection management state of the UE in consideration of a coverage characteristic of the satellite access, a characteristic of a network, a mobility characteristic, and/or a characteristic of an application/service used by the UE. For example, a case where (1) the UE is installed in a fixed location, (2) a service of transmitting/receiving non-time critical data having a small amount of capacity is used, (3) the coverage area of the satellite access is wide, (4) the coverage area of the satellite access moves by a predetermined period, and (5) the network has a capability of buffering data having a sufficient amount of capacity may be assumed. In the above-described assumption situations (1) to (5), when the UE enters time duration T2 while being located in TA1, the 5GC may configure a sufficiently long periodic registration update timer value of the UE (e.g., a value corresponding to 10 hours or greater than 10 hours and smaller than 20 hours when the period of the satellite access period is 10 hours) so that (A) the UE is de-registered and registered again when the UE returns in the next time duration T1, or (B) the UE performs periodic registration when returns in the next time duration T1. For example, the value of the periodic registration update timer may include a value for the length of the period 525 (e.g., out of coverage) of the satellite access. In the case of (A), the 5GC can save network resources by de-registering the UE. In the case of (B), the 5GC can reduce a network signaling load by allowing a number of UEs located in TA1 to avoid repeating de-registration and registration.

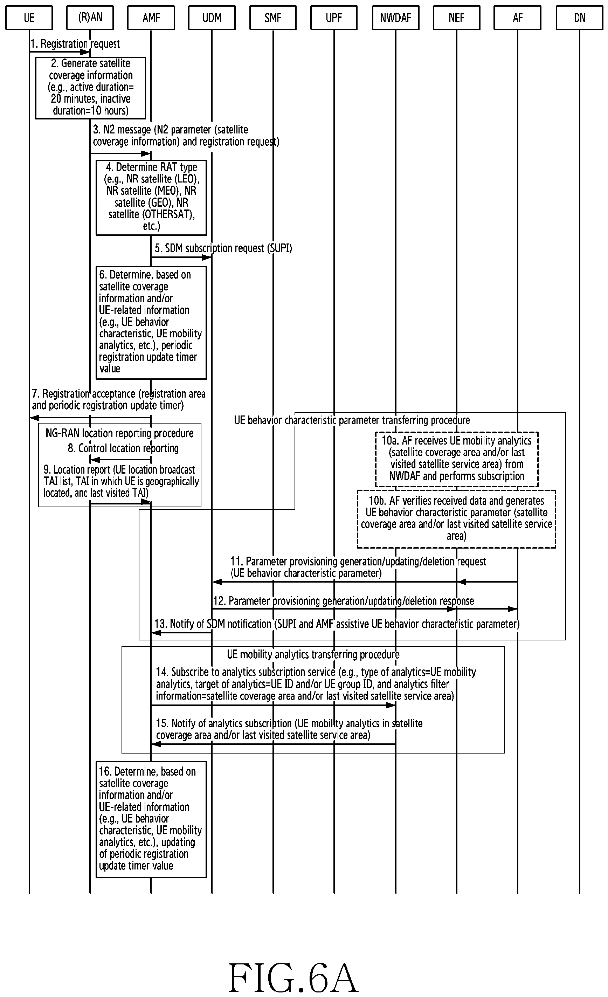

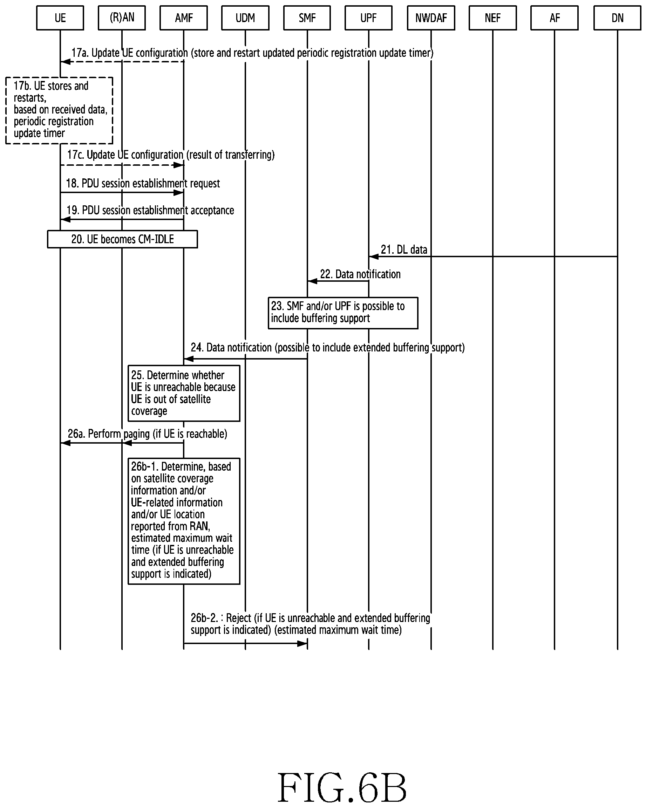

FIGS. 6A and 6B illustrate a flow of signals for managing registration and connection of a UE in consideration of UE mobility and satellite coverage in a wireless communication system according to various embodiments of the disclosure. More specifically, FIGS. 6A and 6B illustrate a method for managing registration and connection of the UE in consideration of the satellite access coverage characteristic, the UE mobility, and the 5GC area management characteristics in the wireless communication system.

Step 1: The UE may request a registration request from the RAN. The UE may include one or more AN parameters and a registration request message in an AN message and transmit the same. The registration request message may include information on at least one of a registration type, a subscription concealed identifier (SUCI), a 5G-globally unique temporary identifier (GUTI), a permanent equipment identifier (PEI), or a last visited tracking area identity (TAI).

Step 2: The RAN may determine whether the UE has accessed using a satellite radio cell. When the RAN determines that the UE has accessed using the satellite radio cell, the RAN may generate coverage information (e.g., satellite coverage information) of a satellite which provides the corresponding satellite radio cell. The satellite coverage information may include information on at least one of a time duration (e.g., a satellite active duration) in which the corresponding satellite cell coverage provides an earth-fixed area with radio access, a time duration (e.g., a satellite inactive duration) in which the corresponding satellite cell coverage cannot provide the earth-fixed area with radio access, or an orbital period (e.g., a satellite orbit period) of the corresponding satellite.

The satellite orbit period, satellite active period, and satellite inactive period included in the satellite coverage information may have a relationship such as an equation below.

$$\text{satellite orbit period} = \text{N (satellite active period} + \text{satellite inactive period)}$$

The orbital period of the satellite may be represented by a multiple of N (e.g., N is a real number greater than 0) for a sum of a time in which the satellite cell coverage provides radio access and a time in which the satellite cell coverage cannot provide radio access.

Step 3: The RAN may transmit a message including a UE registration request and related information to the AMF. The RAN may transmit the registration request to the AMF by using an N2 message. The N2 message transmitted by the RAN may include information on at least one of the registration request or one or more N2 parameters including satellite coverage information.

Step 4: The AMF may determine a radio access technology type (RAT type) using a satellite that the UE uses (e.g., accesses). The AMF may receive an ID of the RAN from the RAN in step 3. The AMF may determine, based on the received ID of the RAN, the type of RAT to which the UE accesses. The RAN ID may include a global RAN node ID. The RAT type using the satellite may include NR (low earth orbit (LEO)), NR (middle earth orbit (MEO)), NR (geostationary orbit (GEO)), and NR (OTHERSAT).

Step 5: The AMF may request notification/subscription from the UDM for a change made to subscription data for the UE. The AMF may transmit an SDM subscribe request message to the UDM.

Step 6: When the AMF determines that the UE has accessed the satellite RAT type in step 4, the AMF may determine a periodic registration update period in consideration of a characteristic of the satellite and/or information related to the UE. The satellite characteristic determined by the AMF may include the satellite coverage information received in step 3 above. The UE-related information determined by the AMF may include an expected UE behavior parameter, information on UE mobility analytics, etc. A detailed process of acquiring information related to the UE by the AMF is descried in steps 10a to 15 below. According to an embodiment, the AMF may configure a value of the periodic registration update to be a value greater than a value of the state inactive duration included in the satellite coverage information. According to another embodiment, the AMF may indicate that the UE expected behavior parameter has a characteristics (stationary) that the UE is located at a fixed location, and may configure the value of the periodic registration update timer to be a value greater than the value of the satellite inactive duration when the satellite inactive duration is considerably longer than the satellite active duration.

Step 7: When the AMF determines to accept the registration request of the UE, the AMF may transmit a registration accept message to the UE. The registration accept message may include at least one of information on a registration area (RA) or information on the periodic registration update timer. When receiving a message including the information on the periodic registration update timer, the UE may start a timer.

Step 8: The AMF may request to report location information of the UE from the RAN. In this case, the AMF may request the RAN to periodically report the location information of the UE, or request the RAN to report the location information whenever the location of the UE is changed.

Step 9: The RAN may transmit a location information report of the UE to the AMF. The location information report may include information on the location of the UE. The UE location may include at least one of TAI information (e.g., a broadcast TAI list) broadcasted by a current RAN, information on a TAI at which the UE is geographically located currently, a TAI at which the UE is currently located, an ID of a cell at which the UE is currently located, a TAI the UE last visited, or an ID of a cell the UE last visited.

According to an embodiment of the disclosure, the above-described steps 8 and 9 may be performed when the AMF determines that the UE has accessed using the satellite RAT type in step 4, or information on the TAI at which the UE is located is required for other reasons. Referring to FIG. 6, it is illustrated that steps 8 and 9 are performed after step 7, but the disclosure is not limited thereto, and steps 8 and 9 may be performed before step 7. For example, when the AMF determines that the UE has accessed using the satellite RAT type in step 4, steps 8 and 9 may be also performed immediately after step 4. According to an embodiment, the AMF may first receive, from the RAN, a broadcast TAI list and/or a TAI at which the UE is geographically located currently, and then determine the RA in consideration of the same. The AMF may also provide the RA determined when transmitting the registration accept message to the UE.

Hereinafter, a process of generating, based on the information acquired from the 5GC by the AF, an expected UE behavior and providing the same to the 5GC is described in steps 10a to 13.

Step 10a: The AF may request, through the NEF, the NWDAF to collect or analyze information (e.g., UE mobility analytics or UE communication analytics) required to determine the expected UE behavior.

[Table 1]

| Expected UE Behaviour parameter | Description |
|---|---|
| Expected UE Moving Trajectory | Identifies the UE's expected geographical movement<br>Example: A planned path of movement |
| Stationary Indication | Identifies whether the UE is stationary or mobile<br>[optional] |
| Communication Duration Time | Indicates for how long the UE will normally stay in CM-Connected for data transmission. |

(continued)

| Expected UE Behaviour parameter | Description |
|---|---|
| | Example: 5 minutes. [optional] |
| Periodic Time | Interval Time of periodic communication Example: every hour. [optional] |
| Scheduled Communication Time | Time and day of the week when the UE is available for communication. Example: Time: 13:00-20:00, Day: Monday. [optional] |
| Battery Indication | Identifies power consumption criticality for the UE: if the UE is battery powered with not rechargeable/not replaceable battery, battery powered with rechargeable/replaceable battery, or not battery powered. [optional] |
| Traffic Profile | Identifies the type of data transmission: single packet transmission (UL or DL), dual packet transmission (UL with subsequent DL or DL with subsequent UL), multiple packets transmission [optional] |
| Scheduled Communication Type | Indicates that the Scheduled Communication Type is Downlink only or Uplink only or Bi-directional [To be used together with Scheduled Communication Time] Example: <Scheduled Communication Time>, DL only. [optional] |
| Expected Time and Day of Week in Trajectory | Identifies the time and day of week when the UE is expected to be at each location included in the Expected UE Moving Trajectory. [optional] |

Table 1 includes detailed descriptions of UE behavior parameters. The expected UE behavior may be information indicating characteristics of expected behaviors of a UE or UEs included in one UE group. Table 1 corresponds to an example of a parameter which can be included in the expected UE behavior.

[Table 2]

| Information | Description |
|---|---|
| UE group ID or UE ID | Identifies a UE or a group of UEs, e.g. internal group ID defined in TS 23.501 [2] clause 5.9.7, SUPI (see NOTE 1). |
| Time slot entry (1..max) | List of time slots during the Analytics target period |
| > Time slot start | Time slot start within the Analytics target period |
| > Duration | Duration of the time slot |
| > UE location (1..max) | Observed location statistics (see NOTE 2) |
| >> UE location | TA or cells which the UE stays (see NOTE 3) |
| >> Ratio | Percentage of UEs in the group (in the case of a UE group) |

Table 2 shows an example of information which can be included in UE mobility statistics.

[Table 3]

| Information | | | Description |
|---|---|---|---|
| UE group ID or UE ID | | | Identifies a UE or a group of UEs, e.g. internal group ID defined in TS 23.501 [2] clause 5.9.7, or SUPI (see NOTE). |
| Time slot entry (1..max) | | | List of predicted time slots |
| >Time slot start | | | Time slot start time within the Analytics target period |
| > Duration | | | Duration of the time slot |
| > UE location (1..max) | | | Predicted location prediction during the Analytics target period |
| | >> UE location | | TA or cells where the UE or UE group may move into (see NOTE 3) |
| | >> Confidence | | Confidence of this prediction |
| | >> Ratio | | Percentage of UEs in the group (in the case of a UE group) |

Table 3 shows an example of information which can be included in UE mobility predictions.

When the AF identifies that the UE uses a service using the satellite access or identifies that the UE access the 5GC via satellite radio access, the AF may request the NWDAF to limit an area subject to UE mobility analytics and/or UE communication analytics to a satellite coverage area and/or a satellite service area (e.g., last visited satellite service area) the UE last visited. The AF may determine a value of each of the satellite coverage area and/or the last visited satellite service area and indicate the same to the NWDAF. When the AF cannot directly identify information on the satellite cell coverage or service area, the AF may request the NWDAF to collect/analyze the corresponding information by acquiring the value of the satellite coverage area and/or the last visited satellite service area directly from another NF. According to an embodiment, the NWDAF may collect information required from 5GC NFs (e.g., AMF and/or SMF), and provide the collected information and/or analytics to the AF through the NEF.

Step 10b: The AF may generate an expected UE characteristic parameter by using the information and/or analytics received from the NWDAF. For example, the AF may generate, based on the UE mobility analytics and/or UE mobility predictions received from the NWDAF, an expected UE behavior. When the AF identifies that the UE uses a service using satellite access or identifies that the UE accesses the 5GC via satellite radio access, the AF may generate the expected UE behavior by limiting the area to the satellite coverage area and/or the satellite service area the UE last visited.

Step 11: The AF may request the UDM to perform at least one of generation, updating, or deletion of the generated expected UE parameter in subscription data of the UDM through the NEF. The UDM may newly generate the received expected UE parameter in subscription data, or may update or delete the expected UE parameter when the expected UE parameter already exists in the subscription data.

Step 12: The UDM may notify the AF of a result of the generation, updating, or deletion of the expected UE parameter through the NEF.

Step 13: The UDM may notify, of the generation/updating/deletion of the expected UE parameter, NFs (e.g., the AMF having made the request in step 5) having requested notification/subscription to the change of the subscription data of the UE as in step 5. The UDM may provide the AMF with the expected UE behavior generated/updated/deleted in step 11, as a notification of the change of the subscription data corresponding to a subscription permanent identifier (SUPI) requested by the AMF in step 5.

In steps 14 and 15, a process of directly acquiring UE mobility analytics and/or UE communication analytics from the NWDAF by the AMF is described.

Step 14: The AMF may request analytics related to UE mobility and/or UE communication from the NWDAF. The AMF may request subscription to an analytics subscription service, and a subscription request message may include a type of analytics, a target of analytics, and analytics filter information. When the AMF identifies that the UE access the 5GC via satellite radio access in step 4, the AMF may request the NWDAF to limit an area subject to UE mobility analytics and/or UE communication analytics to a satellite coverage area and/or a satellite service area (last visited satellite service area) the UE last visited. The AMF may determine a value of the satellite coverage area and/or the last visited satellite service area, and indicate the same to the NWDAF. When the AMF cannot directly identify information on the satellite cell coverage or service area, the AMF may request the NWDAF to collect/analyze the corresponding information by acquiring a value of the satellite coverage area and/or the last visited satellite service area directly from another NF. According to an embodiment, the AMF may indicate, as a satellite coverage area, all or part of the TAI included in the broadcast TAI list received from the RAN in step 9, or indicate an RA (e.g., also including a case where steps 8 and 9 are performed before step 7) of step 7 as a satellite coverage area. According to another embodiment, the AMF may also indicate, as the last visited satellite service area, a TAI the UE last visited or a TAI at which the UE is currently located, the TAI being received from the RAN in step 9.

Step 15: The NWDAF may transmit information and/or analytics of the request of the AMF in step 14 to the AMF.

The procedure (procedure A) of providing the expected UE behavior to the 5GC by the AF, described in steps 10a to 13, and the procedure (procedure B) of acquiring UE mobility analytics and/or UE connection analytics from the AMF, described in steps 14 and 15, may be independently performed through the NWDAF. Accordingly, procedure A and procedure B may be simultaneously performed, and only one of the procedures may be independently performed.

Step 16: The AMF may update the periodic registration update time value determined in step 6. For example, when determining the periodic registration update timer value in step 6, the AMF may not consider the satellite coverage information or UE-related information together, but when the satellite coverage information or the UE-related information is acquired in steps 10a to 15, the AMF may update the periodic registration update timer value. Alternatively, the AMF may newly configure a periodic registration update time value in consideration of the UE-related information acquired in steps 10a to 15, and update the periodic registration update timer value with the newly configured periodic registration update time value.

The operation from step 17a is illustrated in FIG. 6B in detail. FIGS. 6A and 6B are divided and illustrated for convenience of description. However, the operation of FIG. 6A and the operation of FIG. 6B may be independently performed and may be performed together.

Referring to FIG. 6B, in step 17a, the AMF may transmit the periodic registration update timer value updated in step 16 to the UE. The AMF may request to update the periodic registration update timer value by using the UE configuration update message.

Step 17b: The UE may update the periodic registration update timer value received from the AMF and restart the timer.

Step 17c: The UE may notify the AMF of a result of the updating.

Step 18: The UE may request PDU session establishment from the AMF. Thereafter, a PDU session establishment procedure is performed.

Step 19: The AMF may transmit PDU session establishment accept to the UE.

Step 20: The UE may be in a connection management (CM)-idle state. The reason that the UE is in the CM-idle state may include a case where the satellite cell coverage moves and the TA at which the UE is located is no longer included in the satellite cell coverage.

Step 21: The DN may transmit, to the UPF, downlink data to be transferred to the UE.

Step 22: The UPF may notify the SMF of the reception of the downlink data in step 21 or generation of mobile terminated data.

Step 23: The SMF may determine whether the SMF and/or the UPF supports data buffering. The SMF may determine whether the UPF supports data buffering when the UPF identifies, in state 2, whether the UPF supports data buffering or even when the UPF does not identify the same. The SMF may separately determine whether the SMF supports data buffering.

Step 24: When the SMF is notified of generation of data by the UPF in step 22, the SMF may notify the AMF of the same. In this case, when the SMF and/or the UPF determines that data buffering is supported in step 23, an extended buffering support indicator may be provided together.

Step 25: When the AMF is notified of generation of data by the SMF in step 24, the AMF may determine whether the UE is reachable. The AMF may determine, with reference to the satellite coverage information, whether the UE is temporarily unreachable according to the movement of the satellite cell coverage. Upon a result of the determination by the AMF, step 26a or steps 26b-1 and 26-2 may be performed.

Step 26a: When the AMF determines that the UE is reachable in step 26, the AMF may page the UE through the RAN.

Step 26b-1: When the AMF determines that the UE is temporarily unreachable according to the movement of the satellite cell coverage in step 25 and receives the extended buffering support indicator from the SMF in step 24, the AMF may determine an expected maximum wait time (e.g., an estimated maximum wait time). In this case, the AMF may determine, based on the satellite coverage information and/or a UE location reported from the RAN, the estimated maximum wait time. In addition, the AMF may determine, based on the periodic registration update timer value determined in step 16, the estimated maximum wait time in consideration of the next estimated periodic registration update time point.

Step 26b-2: When the AMF determines that the UE is temporarily unreachable according to the movement of the satellite cell coverage in step 25, the AMF may transmit, to the SMF, a reject message to inform that the UE cannot be paged because the UE is unreachable. When the AMF receives the extended buffering support indicator from the SMF in step 24, the AMF may also provide the estimated maximum wait time determined in step 26b-1.

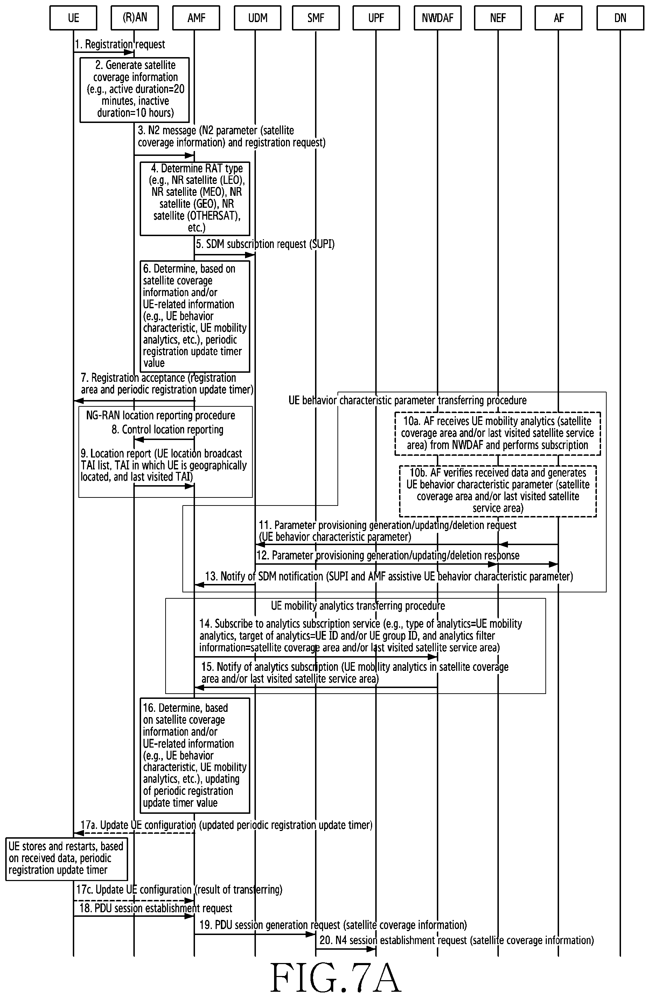

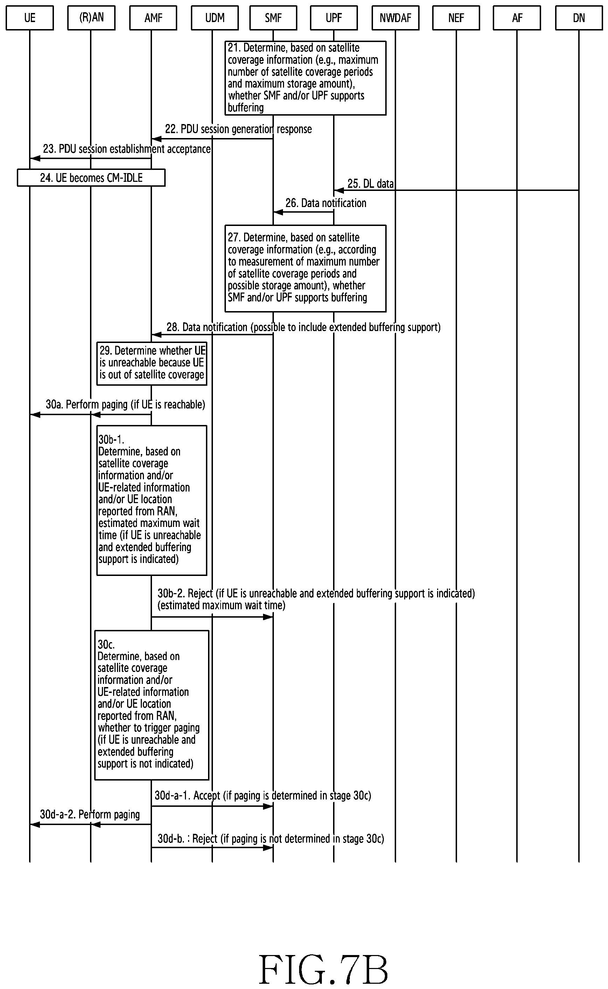

FIGS. 7A and 7B illustrate a flow of signals for managing registration and connection of a UE in consideration of a location of the UE in a wireless communication system according to various embodiments of the disclosure. More specifically, FIGS. 7A and 7B illustrate a method for managing registration and connection of the UE in consideration of the satellite access coverage characteristic, the UE mobility, the 5GC area management characteristic, and the data characteristic in the wireless communication system. Steps 1 to 18 of FIGS. 7A and 7B are identical to steps 1 to 18 of FIGS. 6A and 6B.

Step 1: The UE may transmit a registration request to the RAN. The UE may include one or more AN parameters and a registration request message in an AN message and transmit the same. The registration request message may include information on at least one of a registration type, a SUCI, a 5G-GUTI, a PEI, or a last visited TAI.

Step 2: The RAN may determine whether the UE has accessed using a satellite radio cell. When the RAN determines that the UE has accessed using the satellite radio cell, the RAN may generate coverage information (e.g., satellite coverage information) of a satellite which provides the corresponding satellite radio cell. The satellite coverage information may include information on at least one of a time duration (e.g., a satellite active duration) in which the corresponding satellite cell coverage provides an earth-fixed area with radio access, a time duration (e.g., a satellite inactive duration) in which the corresponding satellite cell coverage cannot provide the earth-fixed area with radio access, or an orbital period (e.g., a satellite orbit period) of the corresponding satellite.

The satellite orbit period, satellite active period, and satellite inactive period included in the satellite coverage information may have a relationship such as an equation below.

satellite orbit period = N (satellite active period + satellite inactive period)

The orbital period of the satellite may be represented by a multiple of N (e.g., N is a real number greater than 0) for a sum of a time in which the satellite cell coverage provides radio access and a time in which the satellite cell coverage cannot provide radio access.

Step 3: The RAN may transmit a message including a UE registration request and related information to the AMF. The RAN may transmit the registration request to the AMF by using an N2 message. The N2 message transmitted by the RAN may include information on at least one of the registration request or one or more N2 parameters including satellite coverage information.

Step 4: The AMF may determine a radio access technology type (RAT type) using a satellite that the UE uses (e.g., accesses). The AMF may receive an ID of the RAN from the RAN in step 3. The AMF may determine, based on the received ID of the RAN, the type of RAT to which the UE accesses. The RAN ID may include a global RAN node ID. The RAT type using the satellite may include NR (low earth orbit (LEO)), NR (middle earth orbit (MEO)), NR (geostationary orbit (GEO)), and NR (OTHERSAT).

Step 5: The AMF may request notification/subscription from the UDM for a change made to subscription data for the UE. The AMF may transmit an SDM subscribe request message to the UDM.

Step 6: When the AMF determines that the UE has accessed the satellite RAT type in step 4, the AMF may determine a periodic registration update period in consideration of a characteristic of the satellite and/or information related to the UE. The satellite characteristic determined by the AMF may include the satellite coverage information received in step 3 above. The UE-related information determined by the AMF may include an expected UE behavior parameter, information on UE mobility analytics, etc. A detailed process of acquiring information related to the UE by the AMF is descried in steps 10a to 15 below. According to an embodiment, the AMF may configure a value of the periodic registration update to be a value greater than a value of the state inactive duration included in the satellite coverage information. According to another embodiment, the AMF may indicate that the UE expected behavior parameter has a characteristics (stationary) that the UE is located at a fixed location, and may configure the value of the periodic registration update timer to be a value greater than the value of the satellite inactive duration when the satellite inactive duration is considerably longer than the satellite active duration.

Step 7: When the AMF determines to accept the registration request of the UE, the AMF may transmit a registration accept message to the UE. The registration accept message may include at least one of information on a registration area (RA) or information on the periodic registration update timer. When receiving a message including the information on the periodic registration update timer, the UE may start a timer.

Step 8: The AMF may request to report location information of the UE from the RAN. In this case, the AMF may request the RAN to periodically report the location information of the UE, or request the RAN to report the location information whenever the location of the UE is changed.

Step 9: The RAN may transmit a location information report of the UE to the AMF. The location information report may include information on the location of the UE. The UE location may include at least one of TAI information (e.g., a broadcast TAI list) broadcasted by a current RAN, information on a TAI at which the UE is geographically located currently, a TAI at which the UE is currently located, an ID of a cell at which the UE is currently located, a TAI the UE last visited, or an ID of a cell the UE last visited.

According to an embodiment of the disclosure, the above-described steps 8 and 9 may be performed when the AMF determines that the UE has accessed using the satellite RAT type in step 4, or information on the TAI at which the UE is located is required for other reasons. Referring to FIG. 6, it is illustrated that steps 8 and 9 are performed after step 7, but the disclosure is not limited thereto, and steps 8 and 9 may be performed before step 7. For example, when the AMF determines that the UE has accessed using the satellite RAT type in step 4, steps 8 and 9 may be also performed immediately after step 4. According to an embodiment, the AMF may first receive, from the RAN, a broadcast TAI list and/or a TAI at which the UE is geographically located currently, and then determine the RA in consideration of the same. The AMF may also provide the RA determined when transmitting the registration accept message to the UE.

Hereinafter, a process of generating, based on the information acquired from the 5GC by the AF, an expected UE behavior and providing the same to the 5GC is described in steps 10a to 13.

Step 10a: The AF may request, through the NEF, the NWDAF to collect or analyze information (e.g., UE mobility analytics or UE communication analytics) required to determine the expected UE behavior. When the AF identifies that the UE uses a service using the satellite access or identifies that the UE access the 5GC via satellite radio access, the AF may request the NWDAF to limit an area subject to UE mobility analytics and/or UE communication analytics to a satellite coverage area and/or a satellite service area (e.g., last visited satellite service area) the UE last visited. The AF may determine a value of each of the satellite coverage area and the last visited satellite service area and indicate the same to the NWDAF. When the AF cannot directly identify information on the satellite cell coverage or service area, the AF may request the NWDAF to collect/analyze the corresponding information by acquiring the value of the satellite coverage area and/or the last visited satellite service area directly from another NF. According to an embodiment, the NWDAF may collect information required from 5GC NFs (e.g., AMF and/or SMF), and provide the collected information and/or analytics to the AF through the NEF.

Step 10b: The AF may generate an expected UE characteristic parameter by using the information and/or analytics received from the NWDAF. For example, the AF may generate, based on the UE mobility analytics and/or UE mobility predictions received from the NWDAF, an expected UE behavior. When the AF identifies that the UE uses a service using satellite access or identifies that the UE accesses the 5GC via satellite radio access, the AF may generate the expected UE behavior by limiting the area to the satellite coverage area and/or the satellite service area the UE last visited.

Step 11: The AF may request the UDM to perform at least one of generation, updating, or deletion of the generated expected UE parameter in subscription data of the UDM through the NEF. The UDM may newly generate the received expected UE parameter in subscription data, or may update or delete the expected UE parameter when the expected UE parameter already exists in the subscription data.

Step 12: The UDM may notify the AF of a result of the generation, updating, or deletion of the expected UE parameter through the NEF.

Step 13: The UDM may notify, of the generation/updating/deletion of the expected UE parameter, NFs (e.g., the AMF having made the request in step 5) having requested notification/subscription to the change of the subscription data of the UE as in step 5. The UDM may provide the AMF with the expected UE behavior generated/updated/deleted in step 11, as a notification of the change of the subscription data corresponding to a subscription permanent identifier (SUPI) requested by the AMF in step 5.

In steps 14 and 15, a process of directly acquiring UE mobility analytics and/or UE communication analytics from the NWDAF by the AMF is described.

Step 14: The AMF may request analytics related to UE mobility and/or UE communication from the NWDAF. The AMF may request subscription to an analytics subscription service, and a subscription request message may include a type of analytics, a target of analytics, and analytics filter information. When the AMF identifies that the UE has accessed the 5GC via satellite radio access in step 4, the AMF may request the NWDAF to limit an area subject to UE mobility analytics and/or UE communication analytics to a satellite coverage area and/or a satellite service area (last visited satellite service area) the UE last visited. The AMF may determine a value of the satellite coverage area and/or the last visited satellite service area, and indicate the same to the NWDAF. When the AMF cannot directly identify information on the satellite cell coverage or service area, the AMF may request the NWDAF to collect/analyze the corresponding information by acquiring a value of the satellite coverage area and/or the last visited satellite service area directly from another NF. According to an embodiment, the AMF may indicate, as a satellite coverage area, all or part of the TAI included in the broadcast TAI list received from the RAN in step 9, or indicate an RA (e.g., also including a case where steps 8 and 9 are performed before step 7) of step 7 as a satellite coverage area. According to another embodiment, the AMF may also indicate, as the last visited satellite service area, a TAI the UE last visited or a TAI at which the UE is currently located, the TAI being received from the RAN in step 9.

Step 15: The NWDAF may transmit information and/or analytics of the request of the AMF in step 14 to the AMF.

The procedure (procedure A) of providing the expected UE behavior to the 5GC by the AF, described in steps 10a to 13, and the procedure (procedure B) of acquiring UE mobility analytics and/or UE connection analytics from the AMF, described in steps 14 and 15, may be independently performed from the NWDAF. Accordingly, procedure A and procedure B may be simultaneously performed, and only one of the procedures may be independently performed.

Step 16: The AMF may update the periodic registration update time value determined in step 6. For example, when determining the periodic registration update timer value in step 6, the AMF may not consider the satellite coverage information or UE-related information together, but when the satellite coverage information or the UE-related information is acquired in steps 10a to 15, the AMF may update the periodic registration update timer value. Alternatively, the AMF may newly configure a periodic registration update time value in consideration of the UE-related information acquired in steps 10a to 15, and update the periodic registration update timer value with the newly configured periodic registration update time value.

Step 17a: The AMF may transmit the periodic registration update timer value updated in step 16 to the UE. The AMF may request to update the periodic registration update timer value by using the UE configuration update message.

Step 17b: The UE may update the periodic registration update timer value received from the AMF and restart the timer.

Step 17c: The UE may notify the AMF of a result of the updating.

Step 18: The UE may request PDU session establishment from the AMF. Thereafter, a PDU session establishment procedure is performed.

Step 19: The AMF may transmit a PDU session create request to the SMF. The AMF may provide the SMF with the satellite coverage information received from the RAN in step 2.

Step 20: The SMF may request N4 session establishment from the UPF. The SMF may provide the UPF with the satellite coverage information received in step 19.

The operation from step 21 is illustrated in FIG. 7B. FIGS. 7A and 7B are divided and illustrated for convenience of description. However, the operation of FIG. 7A and the operation of FIG. 7B may be independently performed and may be performed together.

Referring to FIG. 7B, in step 21, the SMF and/or the UPF may determine whether the SMF and/or the UPF supports data buffering. The UPF may notify the SMF of whether the UPF supports data buffering. The SMF may determine whether the UPF supports data buffering, regardless of whether the UPF notifies the same. The SMF may separately determine whether the SMF supports data buffering. In determining whether the SMF and/or the UPF supports data buffering, the SMF and/or the UPF may determine the same based on the satellite coverage information received in steps 19 and 20. The SMF and/or the UPF may determine a maximum number of satellite coverage periods by which data buffering can be performed by the SMF and/or the UPF, a time interval in which data buffering can be performed by the SMF and/or the UPF, the amount of capacity of data which can be buffered by the SMF and/or the UPF, or the like.

Step 22: The SMF may transmit a PDU session create response to the AMF. A PDU session establishment procedure may be performed.

Step 23: When the PDU session establishment request is accepted, the AMF may transmit a PDU session establishment accept message to the UE.

Step 24: The UE may be in a CM-idle state. The reason that the UE is in the CM-idle state may include a case where the satellite cell coverage moves and the TA at which the UE is located is no longer included in the satellite cell coverage.

Step 25: The DN may transmit, to the UPF, downlink data to be transferred to the UE.

Step 26: The UPF may notify the SMF of the reception of the downlink data in step 25 or generation of mobile terminated data.

Step 27: The SMF may determine whether the SMF and/or the UPF supports data buffering. The SMF may determine whether the UPF supports data buffering, regardless of whether the UPF has notified whether the UPF supports data buffering in step 21 or 26. The SMF may separately determine whether the SMF supports data buffering. In determining whether the SMF and/or the UPF supports data buffering, the SMF and/or the UPF may determine the same based on the satellite coverage information received in steps 19 and 20. The SMF and/or the UPF may determine a maximum number of satellite coverage periods by which data buffering can be performed by the SMF and/or the UPF, a time interval in which data buffering can be performed by the SMF and/or the UPF, the amount of capacity of data which can be buffered by the SMF and/or the UPF, or the like.

Step 28: When the SMF is notified of generation of data by the UPF in step 22, the SMF may notify the AMF of the same. In this case, when the SMF and/or the UPF determines that data buffering is supported in step 27, an extended buffering support indicator may be provided together.

Step 29: When the AMF is notified of generation of data by the SMF in step 28, the AMF may determine whether the UE is reachable. The AMF may determine, with reference to the satellite coverage information, whether the UE is temporarily unreachable according to the movement of the satellite cell coverage. Upon a result of the determination by the AMF, step 30a steps 30b-1 and 30-2, or step 30c may be performed.

Step 30a: When the AMF determines that the UE is reachable in step 26, the AMF may page the UE through the RAN.

Step 30b-1: When the AMF determines that the UE is temporarily unreachable according to the movement of the satellite cell coverage in step 29 and receives the extended buffering support indication from the SMF in step 28, the AMF may determine an estimated maximum wait time. In this case, the AMF may determine, based on the satellite coverage information and/or a UE location reported from the RAN, the estimated maximum wait time. In addition, the AMF may determine, based on the periodic registration update timer value determined in step 16, the estimated maximum wait time in consideration of the next estimated periodic registration update time point.

Step 30b-2: When the AMF determines that the UE is temporarily unreachable according to the movement of the satellite cell coverage in step 29, the AMF may transmit, to the SMF, a reject message to inform that the UE cannot be paged because the UE is unreachable. When the AMF receives the extended buffering support indicator from the SMF in step 28, the AMF may also provide the estimated maximum wait time determined in step 30b-1.

When the AMF determines that the UE is temporarily unreachable according to the movement of the satellite cell coverage in step 29 and the SMF does not provides the extended buffering support indicator in step 28, the AMF may determine, in step 30c, whether to perform paging based on at least one of satellite coverage information and/or a UE location reported from the RAN, UE-related information (e.g., UE mobility analytics and/or UE communication analytics), and a periodic registration update timer value. For example, in a case where whether to perform paging is determined based on the UE mobility analytics, when the UE mainly performs communication at a fixed location and it is determined that there is too much download data lost if UE paging is not performed since several hours are left until the next periodic registration update time expected with reference to the satellite coverage information and/or the periodic registration update timer value, it may be determined that paging is to be performed. Upon the determination in step 30c, steps 30d-a-1 and 30d-a-2 or step 30d-b may be performed.

Step 30d-a-1: When the AMF determines to perform paging in step 30c, the AMF may transmit, to the SMF, an accept message to inform that it is determined to perform paging.

Step 30d-a-2: When the AMF determines to perform paging in step 30c, the AMF may perform UE paging through the RAN.

Steps 30d-a-1 and 30d-a-2 are independent from each other, and the sequence of the steps may be changed.

Step 30d-b: When the AMF determines not to perform paging in step 30c, the AMF may transmit, to the SMF, a reject message to inform that it is determined that paging is not to be performed.

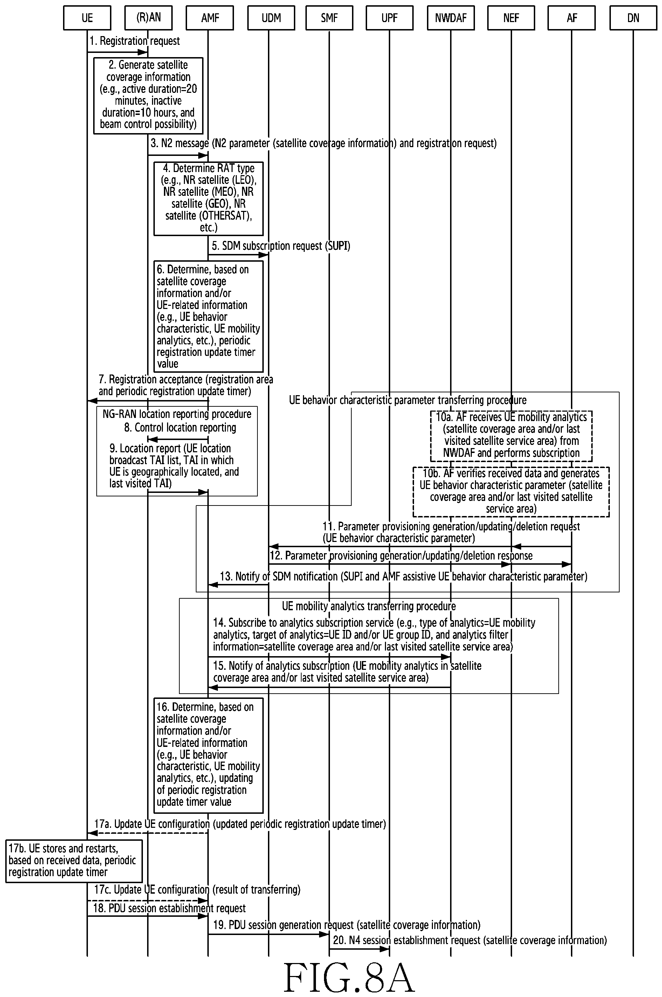

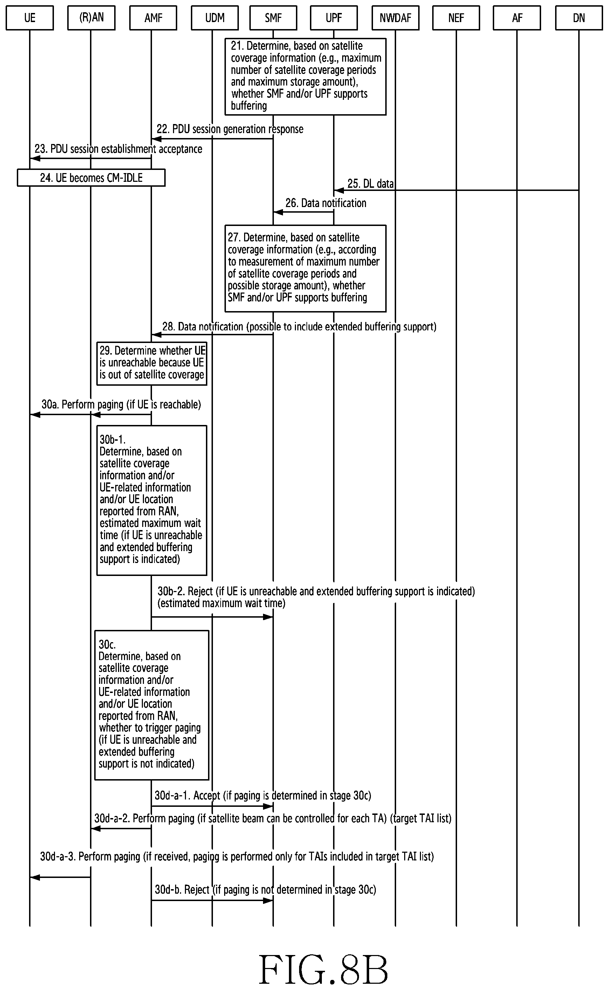

FIGS. 8A and 8B illustrate a flow of signals for managing registration and connection of a UE in consideration of a beam control capability in a wireless communication system according to various embodiments of the disclosure. More specifically, FIGS. 8A and 8B illustrate a method for managing registration and connection of the UE in consideration of the satellite access coverage characteristic, the UE mobility, the 5GC area management characteristic, the data characteristic, and the satellite access radio capability in the wireless communication system. Steps 1 to 30c of FIGS. 8A and 8B are identical to steps 1 to 30c of FIGS. 7A and 7B.

Step 1: The UE may transmit a registration request to the RAN. The UE may include one or more AN parameters and a registration request message in an AN message and transmit the same. The registration request message may include information on at least one of a registration type, a SUCI, a 5G-GUTI, a PEI, or a last visited TAI.

Step 2: The RAN may determine whether the UE has accessed using a satellite radio cell. When the RAN determines that the UE has accessed using the satellite radio cell, the RAN may generate coverage information (e.g., satellite coverage information) of a satellite which provides the corresponding satellite radio cell. The satellite coverage information may include information on at least one of a time duration (e.g., a satellite active duration) in which the corresponding satellite cell coverage provides an earth-fixed area with radio access, a time duration (e.g., a satellite inactive duration) in which the corresponding satellite cell coverage cannot provide the earth-fixed area with radio access, or an orbital period (e.g., a satellite orbit period) of the corresponding satellite.

The satellite orbit period, satellite active period, and satellite inactive period included in the satellite coverage information may have a relationship such as an equation below.

$$\text{satellite orbit period} = N \, (\text{satellite active period} + \text{satellite inactive period})$$

The orbital period of the satellite may be represented by a multiple of N (e.g., N is a real number greater than 0) for a sum of a time in which the satellite cell coverage provides radio access and a time in which the satellite cell coverage cannot provide radio access.

Step 3: The RAN may transmit a message including a UE registration request and related information to the AMF. The RAN may transmit the registration request to the AMF by using an N2 message. The N2 message transmitted by the RAN may include information on at least one of the registration request or one or more N2 parameters including satellite coverage information.

Step 4: The AMF may determine a radio access technology type (RAT type) using a satellite that the UE uses (e.g., accesses). The AMF may receive an ID of the RAN from the RAN in step 3. The AMF may determine, based on the received ID of the RAN, the type of RAT to which the UE accesses. The RAN ID may include a global RAN node ID. The RAT type using the satellite may include NR (low earth orbit (LEO)), NR (middle earth orbit (MEO)), NR (geostationary orbit (GEO)), and NR (OTHERSAT).

Step 5: The AMF may request notification/subscription from the UDM for a change made to subscription data for the UE. The AMF may transmit an SDM subscribe request message to the UDM.

Step 6: When the AMF determines that the UE has accessed the satellite RAT type in step 4, the AMF may determine a periodic registration update period in consideration of a characteristic of the satellite and/or information related to the UE. The satellite characteristic determined by the AMF may include the satellite coverage information received in step 3 above. The UE-related information determined by the AMF may include an expected UE behavior parameter, information on UE mobility analytics, etc. A detailed process of acquiring information related to the UE by the AMF is descried in steps 10a to 15 below. According to an embodiment, the AMF may configure a value of the periodic registration update to be a value greater than a value of the state inactive duration included in the satellite coverage information. According to another embodiment, the AMF may indicate that the UE expected behavior parameter has a characteristics (stationary) that the UE is located at a fixed location, and may configure the value of the periodic registration update timer to be a value greater than the value of the satellite inactive duration when the satellite inactive duration is considerably longer than the satellite active duration.

Step 7: When the AMF determines to accept the registration request of the UE, the AMF may transmit a registration accept message to the UE. The registration accept message may include at least one of information on a registration area (RA) or information on the periodic registration update timer. When receiving a message including the information on the periodic registration update timer, the UE may start a timer.

Step 8: The AMF may request to report location information of the UE from the RAN. In this case, the AMF may request the RAN to periodically report the location information of the UE, or request the RAN to report the location information whenever the location of the UE is changed.

Step 9: The RAN may transmit a location information report of the UE to the AMF. The location information report may include information on the location of the UE. The UE location may include at least one of TAI information (e.g., a broadcast TAI list) broadcasted by a current RAN, information on a TAI at which the UE is geographically located currently, a TAI at which the UE is currently located, an ID of a cell at which the UE is currently located, a TAI the UE last visited, or an ID of a cell the UE last visited.

According to an embodiment of the disclosure, the above-described steps 8 and 9 may be performed when the AMF determines that the UE has accessed using the satellite RAT type in step 4, or information on the TAI at which the UE is located is required for other reasons. Referring to FIG. 6, it is illustrated that steps 8 and 9 are performed after step 7, but the disclosure is not limited thereto, and steps 8 and 9 may be performed before step 7. For example, when the AMF determines that the UE has accessed using the satellite RAT type in step 4, steps 8 and 9 may be also performed immediately after step 4. According to an embodiment, the AMF may first receive, from the RAN, a broadcast TAI list and/or a TAI at which the UE is geographically located currently, and then determine the RA in consideration of the same. The AMF may also provide the RA determined when transmitting the registration accept message to the UE.

Hereinafter, a process of generating, based on the information acquired from the 5GC by the AF, an expected UE behavior and providing the same to the 5GC is described in steps 10a to 13.

Step 10a: The AF may request, through the NEF, the NWDAF to collect or analyze information (e.g., UE mobility analytics or UE communication analytics) required to determine the expected UE behavior. When the AF identifies that the UE uses a service using the satellite access or identifies that the UE access the 5GC via satellite radio access, the AF may request the NWDAF to limit an area subject to UE mobility analytics and/or UE communication analytics to a satellite coverage area and/or a satellite service area (e.g., last visited satellite service area) the UE last visited. The AF may determine a value of each of the satellite coverage area and the last visited satellite service area and indicate the same to the NWDAF. When the AF cannot directly identify information on the satellite cell coverage or service area, the AF may request the NWDAF to collect/analyze the corresponding information by acquiring the value of the satellite coverage area and/or the last visited satellite service area directly from another NF. According to an embodiment, the NWDAF may collect information required from 5GC NFs (e.g., AMF and/or SMF), and provide the collected information and/or analytics to the AF through the NEF.

Step 10b: The AF may generate an expected UE characteristic parameter by using the information and/or analytics received from the NWDAF. For example, the AF may generate, based on the UE mobility analytics and/or UE mobility predictions received from the NWDAF, an expected UE behavior. When the AF identifies that the UE uses a service using satellite access or identifies that the UE accesses the 5GC via satellite radio access, the AF may generate the expected UE behavior by limiting the area to the satellite coverage area and/or the satellite service area the UE last visited.

Step 11: The AF may request the UDM to perform at least one of generation, updating, or deletion of the generated expected UE parameter in subscription data of the UDM through the NEF. The UDM may newly generate the received expected UE parameter in subscription data, or may update or delete the expected UE parameter when the expected UE parameter already exists in the subscription data.

Step 12: The UDM may notify the AF of a result of the generation, updating, or deletion of the expected UE parameter through the NEF.

Step 13: The UDM may notify, of the generation/updating/deletion of the expected UE parameter, NFs (e.g., the AMF having made the request in step 5) having requested notification/subscription to the change of the subscription data of the UE as in step 5. The UDM may provide the AMF with the expected UE behavior generated/updated/deleted in step 11, as a notification of the change of the subscription data corresponding to a subscription permanent identifier (SUPI) requested by the AMF in step 5.

In steps 14 and 15, a process of directly acquiring UE mobility analytics and/or UE communication analytics from the NWDAF by the AMF is described.

Step 14: The AMF may request analytics related to UE mobility and/or UE communication from the NWDAF. The AMF may request subscription to an analytics subscription service, and a subscription request message may include a type of analytics, a target of analytics, and analytics filter information. When the AMF identifies that the UE has accessed the 5GC via satellite radio access in step 4, the AMF may request the NWDAF to limit an area subject to UE mobility analytics and/or UE communication analytics to a satellite coverage area and/or a satellite service area (last visited satellite service area) the UE last visited. The AMF may determine a value of the satellite coverage area and/or the last visited satellite service area, and indicate the same to the NWDAF. When the AMF cannot directly identify information on the satellite cell coverage or service area, the AMF may request the NWDAF to collect/analyze the corresponding information by acquiring a value of the satellite coverage area and/or the last visited satellite service area directly from another NF. According to an embodiment, the AMF may indicate, as a satellite coverage area, all or part of the TAI included in the broadcast TAI list received from the RAN in step 9, or indicate an RA (e.g., also including a case where steps 8 and 9 are performed before step 7) of step 7 as a satellite coverage area. According to another embodiment, the AMF may also indicate, as the last visited satellite service area, a TAI the UE last visited or a TAI at which the UE is currently located, the TAI being received from the RAN in step 9.

Step 15: The NWDAF may transmit information and/or analytics of the request of the AMF in step 14 to the AMF.

The procedure (procedure A) of providing the expected UE behavior to the 5GC by the AF, described in steps 10a to 13, and the procedure (procedure B) of acquiring UE mobility analytics and/or UE connection analytics from the AMF, described in steps 14 and 15, may be independently performed from the NWDAF. Accordingly, procedure A and procedure B may be simultaneously performed, and only one of the procedures may be independently performed.

Step 16: The AMF may update the periodic registration update time value determined in step 6. For example, when determining the periodic registration update timer value in step 6, the AMF may not consider the satellite coverage information or UE-related information together, but when the satellite coverage information or the UE-related information is acquired in steps 10a to 15, the AMF may update the periodic registration update timer value. Alternatively, the AMF may newly configure a periodic registration update time value in consideration of the UE-related information acquired in steps 10a to 15, and update the periodic registration update timer value with the newly configured periodic registration update time value.

Step 17a: The AMF may transmit the periodic registration update timer value updated in step 16 to the UE. The AMF may request to update the periodic registration update timer value by using the UE configuration update message.

Step 17b: The UE may update the periodic registration update timer value received from the AMF and restart the timer.

Step 17c: The UE may notify the AMF of a result of the updating.

Step 18: The UE may request PDU session establishment from the AMF. Thereafter, a PDU session establishment procedure is performed.

Step 19: The AMF may transmit a PDU session create request to the SMF. The AMF may provide the SMF with the satellite coverage information received from the RAN in step 2.

Step 20: The SMF may request N4 session establishment from the UPF. The SMF may provide the UPF with the satellite coverage information received in step 19.

The operation from step 21 is illustrated in FIG. 8B. FIGS. 8A and 8B are divided and illustrated for convenience of description. However, the operation of FIG. 8A and the operation of FIG. 8B may be independently performed and may be performed together.

Referring to FIG. 8B, in step 21, the SMF and/or the UPF may determine whether the SMF and/or the UPF supports data buffering. The UPF may notify the SMF of whether the UPF supports data buffering. The SMF may determine whether the UPF supports data buffering, regardless of whether the UPF notifies the same. The SMF may separately determine whether the SMF supports data buffering. In determining whether the SMF and/or the UPF supports data buffering, the SMF and/or the UPF may determine the same based on the satellite coverage information received in steps 19 and 20. The SMF and/or the UPF may determine a maximum number of satellite coverage periods by which data buffering can be performed by the SMF and/or the UPF, a time interval in which data buffering can be performed by the SMF and/or the UPF, the amount of capacity of data which can be buffered by the SMF and/or the UPF, or the like.

Step 22: The SMF may transmit a PDU session create response to the AMF. A PDU session establishment procedure may be performed.

Step 23: When the PDU session establishment request is accepted, the AMF may transmit a PDU session establishment accept message to the UE.

Step 24: The UE may be in a CM-idle state. The reason that the UE is in the CM-idle state may include a case where the satellite cell coverage moves and the TA at which the UE is located is no longer included in the satellite cell coverage.

Step 25: The DN may transmit, to the UPF, downlink data to be transferred to the UE.

Step 26: The UPF may notify the SMF of the reception of the downlink data in step 25 or generation of mobile terminated data.

Step 27: The SMF may determine whether the SMF and/or the UPF supports data buffering.

The SMF may determine whether the UPF supports data buffering, regardless of whether the UPF has notified whether the UPF supports data buffering in step 21 or 26. The SMF may separately determine whether the SMF supports data buffering. In determining whether the SMF and/or the UPF supports data buffering, the SMF and/or the UPF may determine the same based on the satellite coverage information received in steps 19 and 20. The SMF and/or the UPF may determine a maximum number of satellite coverage periods by which data buffering can be performed by the SMF and/or the UPF, a time interval in which data buffering can be performed by the SMF and/or the UPF, the amount of capacity of data which can be buffered by the SMF and/or the UPF, or the like.

Step 28: When the SMF is notified of generation of data by the UPF in step 22, the SMF may notify the AMF of the same. In this case, when the SMF and/or the UPF determines that data buffering is supported in step 27, an extended buffering support indicator may be provided together

Step 29: When the AMF is notified of generation of data by the SMF in step 28, the AMF may determine whether the UE is reachable. The AMF may determine, with reference to the satellite coverage information, whether the UE is temporarily unreachable according to the movement of the satellite cell coverage. Upon a result of the determination by the AMF, step 30a, 30b-1 and 30-2, or step 30c may be performed.

Step 30a: When the AMF determines that the UE is reachable in step 26, the AMF may page the UE through the RAN.

Step 30b-1: When the AMF determines that the UE is temporarily unreachable according to the movement of the satellite cell coverage in step 29 and receives the extended buffering support indication from the SMF in step 28, the AMF may determine an estimated maximum wait time. In this case, the AMF may determine, based on the satellite coverage information and/or a UE location reported from the RAN, the estimated maximum wait time. In addition, the AMF may determine, based on the periodic registration update timer value determined in step 16, the estimated maximum wait time in consideration of the next estimated periodic registration update time point.

Step 30b-2: When the AMF determines that the UE is temporarily unreachable according to the movement of the satellite cell coverage in step 29, the AMF may transmit, to the SMF, a reject message to inform that the UE cannot be paged because the UE is unreachable. When the AMF receives the extended buffering support indicator from the SMF in step 28, the AMF may also provide the estimated maximum wait time determined in step 30b-1.

When the AMF determines that the UE is temporarily unreachable according to the movement of the satellite cell coverage in step 29 and the SMF does not provides the extended buffering support indicator in step 28, the AMF may determine, in step 30c, whether to perform paging based on at least one of satellite coverage information and/or a UE location reported from the RAN, UE-related information (e.g., UE mobility analytics and/or UE communication analytics), and a periodic registration update timer value. For example, in a case where whether to perform paging is determined based on the UE mobility analytics, when the UE mainly performs communication at a fixed location and it is determined that there is too much download data lost if UE paging is not performed since several hours are left until the next periodic registration update time expected with reference to the satellite coverage information and/or the periodic registration update timer value, it may be determined that paging is to be performed. Upon the determination in step 30c, steps 30d-a-1 and 30d-a-2 or step 30d-b may be performed. When the satellite coverage information includes whether satellite beam control is possible, the AMF may determine whether to perform paging in consideration of whether satellite beam control is possible.

Step 30d-a-1: When the AMF determines to perform paging in step 30c, the AMF may transmit, to the SMF, an accept message to inform that it is determined to perform paging.

Step 30d-a-2: When the AMF determines to perform paging in step 30c, the AMF may perform UE paging through the RAN. When the satellite coverage information includes whether satellite beam control is possible, the AMF may determine whether a satellite beam can be controlled to cover some areas (e.g., one TA or several TAs) of the RA. When the AFM determines that the satellite beam can be controlled to cover controlled to cover some areas (e.g., one TA or several TAs) of the RA, the AMF may provide the RAN with a TAI list (target TAI list) subject to paging when requesting UE paging. When the AMF determines that the satellite beam cannot be controlled to cover some areas of the RA, the AMF may provide or may not provide the RAN with a TAI list (target TAI list) subject to paging when requesting UE paging. In configuring the paging TAI list, the AMF may refer to UE location information reported from the RAN. For example, when the determination is made based on the satellite coverage information, only a TA belonging to an area corresponding to an intersection between an area covered by the satellite at a current time and an area covered by the RA may be included.

Steps 30d-a-1 and 30d-a-2 are independent from each other, and the sequence of the steps may be changed.

Step 30d-a-3: The RAN may perform UE paging upon a paging request of the AMF in step 30d-a-2. In a case where the satellite beam control is possible, when the paging request received in step 30d-a-2 includes the target TAI list, the RAN may perform paging for an area covered by TAIs included in the target TAI list. In a case where the satellite beam control is possible, when the paging request received in step 30d-a-2 does not include the target TAI list, the RAN may perform paging for the RA. In a case where the satellite beam control is not possible, when the paging request received in step 30d-a-2 includes the target TAI list, the RAN may perform paging for one area among (1) an area coverable by the satellite beam, (2) an area covered by TAIs included in the target TAI list, and (3) an area covered by the RA. In a case where the satellite beam control is not possible, when the paging request received in step 30d-a-2 does not include the target TAI list, the RAN may perform paging for one area between (a) an area coverable by the satellite beam and (b) an area covered by the RA.

Step 30d-b: When the AMF determines not to perform paging in step 30c, the AMF may transmit, to the SMF, a reject message to inform that it is determined that paging is not to be performed.

According to various embodiments of the disclosure, a method performed by an access mobility and management function (AMF) node in a wireless communication system may include receiving, from a radio access network (RAN) node, an N2 message including a request to register a terminal and information on a satellite used by the terminal, receiving, from a network data analytics function (NWDAF) node, information on mobility of the terminal, determining, based on the N2 massage and the information on the mobility of the terminal, a periodic registration update timer value, and transmitting the periodic registration update timer value to the terminal.

According to an embodiment, the method may further include receiving location information of the terminal from the RAN node, receiving a message about occurrence of data from a session management function (SMF) node, determining, based on the information on the satellite used by the terminal and the location information of the terminal, an estimated maximum wait time, and determining, based on the message about the occurrence of the data and the periodic registration update timer value, whether the terminal is reachable.

According to an embodiment, the method may further include in case that the terminal is reachable, transmitting a paging message to the terminal, and in case that the terminal is unreachable, transmitting, to the SMF node, a reject message for informing of the estimated maximum wait time and informing that paging for the terminal is not to be performed to the SMF node.

According to an embodiment, the method may further include transmitting a message about a PDU session generation request to the session management function (SMF) node, and receiving, from the SMF node, a message about a PDU session generation response generated in relation to whether data buffering is supported.

According to an embodiment, the method may further include in case that the terminal is reachable, transmitting a first paging message to the terminal, in case that the terminal is unreachable and the SMF node supports the data buffering, transmitting, the SMF node, a reject message for informing of the estimated maximum wait time and informing that paging for the terminal is not to be performed to the SMF mode, and in case that the terminal is unreachable and the SMF node does not support the data buffering, transmitting a second paging message to the terminal.

According to an embodiment, the second paging message may include a list of tracking area identities (TAIs) subject to paging.

According to an embodiment, the N2 message may include at least one of registration information of the terminal or coverage information of a satellite related to a satellite radio cell accessed by the terminal.

According to an embodiment, the method may further include transmitting, to a unified data management (UDM) node, a subscription request message about subscriber data of the terminal.

According to an embodiment, the method may further include determining, based on the N2 message, a radio access technology (RAT) type using the satellite used by the terminal, and receiving a protocol data unit (PDU) session establishment request message from the terminal.

According to an embodiment, the information on the mobility of the terminal may include at least one parameter among a type of analytics information, a target of analytics, or analytics filter information.

According to various embodiments of the disclosure, an access mobility and management function (AMF) mode in a wireless communication system may include at least one transceiver, and a controller coupled to the at least one transceiver, wherein the controller is configured to receive, from a radio access network (RAN) node, an N2 message including a request to register a terminal and information on a satellite used by the terminal, receive, from a network data analytics function (NWDAF) node, information on mobility of the terminal, determine, based on the N2 massage and the information on the mobility of the terminal, a periodic registration update timer value and transmit the periodic registration update timer value to the terminal.

According to an embodiment, the controller may be configured to receive location information of the terminal from the RAN node, receive a message about occurrence of data from a session management function (SMF) node, determine, based on the information on the satellite used by the terminal and the location information of the terminal, an estimated maximum wait time, and determine, based on the message about the occurrence of the data and the periodic registration update timer value, whether the terminal is reachable.

According to an embodiment, the controller may be further configured to in case that the terminal is reachable, transmit a paging message to the terminal, and in case that the terminal is unreachable, transmit, to the SMF node, a reject message for informing of the estimated maximum wait time and informing that paging for the terminal is not to be performed.

According to an embodiment, the controller may be further configured to transmit a message about a PDU session generation request to a session management function (SMF) node, and receive, from the SMF node, a message about a PDU session generation response generated in relation to whether data buffering is supported.

According to an embodiment, the controller may be configured to in case that the terminal is reachable, transmit a first paging message to the terminal, in case that the terminal is unreachable and the SMF node supports the data buffering, transmit, to the SMF node, a reject message for informing of the estimated maximum wait time and informing that paging for the terminal is not to be performed, and in case that the terminal is unreachable and the SMF node does not support the data buffering, transmit a second paging message to the terminal.

According to an embodiment, the second paging message may include a list of tracking area identities (TAIs) subject to paging.

According to an embodiment, the N2 message may include at least one of registration information of the terminal or coverage information of a satellite related to a satellite radio cell accessed by the terminal.

According to an embodiment, the controller may be further configured to transmit, to a unified data management (UDM) node, a subscription request message about subscriber data of the terminal.

According to an embodiment, the controller may be further configured to determine, based on the N2 message, a radio access technology (RAT) type using the satellite used by the terminal, and receive a protocol data unit (PDU) session establishment request message from the terminal.

According to an embodiment, the information on the mobility of the terminal may include at least one parameter among a type of analytics information, a target of analytics, or analytics filter information.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by an access mobility and management function (AMF) node in a wireless communication system, the method comprising:

   receiving, from a radio access network (RAN) node, an N2 message including a request to register a user equipment (UE) and information on a satellite used by the UE;
   receiving, from a network data analytics function (NWDAF) node, information on mobility of the UE;
   based on the N2 massage and the information on the mobility of the UE, determining a periodic registration update timer value; and
   transmitting, to the UE, the periodic registration update timer value.

2. The method of claim 1, further comprising:

   receiving, from the RAN node, location information of the UE;
   receiving, from a session management function (SMF) node, a message about occurrence of data;
   based on the information on the satellite used by the UE and the location information of the UE, determining an estimated maximum wait time; and
   based on the message about the occurrence of the data and the periodic registration update timer value, determining whether the UE is reachable.

3. The method of claim 2, further comprising:

   in case that the UE is reachable, transmitting, to the UE, a paging message; and
   in case that the UE is unreachable, transmitting, to the SMF node, a reject message for informing of the estimated maximum wait time and informing that paging for the UE is not to be performed.

4. The method of claim 2, further comprising:

   transmitting, to the SMF node, a message about a PDU session generation request; and
   receiving, from the SMF node, a message about a PDU session generation response generated in relation to whether data buffering is supported.

5. The method of claim 4, further comprising:

   in case that the UE is reachable, transmitting, to the UE, a first paging message;
   in case that the UE is unreachable and the SMF node supports the data buffering, transmitting, to the SMF node, a reject message for informing of the estimated maximum wait time and informing that paging for the UE is not to be performed; and
   in case that the UE is unreachable and the SMF node does not support the data buffering, transmitting, to the UE, a second paging message.

6. The method of claim 5, wherein the second paging message includes a list of tracking area identities (TAIs) subject to paging.

7. The method of claim 1, wherein the N2 message includes at least one of registration information of the UE or coverage information of a satellite related to a satellite radio cell accessed by the UE.

8. The method of claim 1, further comprising transmitting, to a unified data management (UDM) node, a subscription request message about subscriber data of the UE.

9. The method of claim 1, further comprising:

   determining, based on the N2 message, a radio access technology (RAT) type using the satellite used by the UE; and
   receiving, from the UE, a protocol data unit (PDU) session establishment request message.

10. The method of claim 1, wherein the information on the mobility of the UE includes at least one parameter among a type of analytics information, a target of analytics, or analytics filter information.

11. An access mobility and management function (AMF) node in a wireless communication system, the AMF node comprising:

    at least one transceiver; and
    a controller coupled to the at least one transceiver,
    wherein the controller is configured to:

       receive, from a radio access network (RAN) node, an N2 message including a request to register a user equipment (UE) and information on a satellite used by the UE;
       receive, from a network data analytics function (NWDAF) node, information on mobility of the UE;

based on the N2 massage and the information on the mobility of the UE, determine a periodic registration update timer value; and

transmit, to the UE, the periodic registration update timer value.

12. The AMF node of claim 11, wherein the controller is configured to:

receive, from the RAN node, location information of the UE;

receive from a session management function (SMF) node, a message about occurrence of data;

based on the information on the satellite used by the UE and the location information of the UE, determine an estimated maximum wait time; and

based on the message about the occurrence of the data and the periodic registration update timer value, determine whether the UE is reachable.

13. The AMF node of claim 12, wherein the controller is further configured to:

in case that the UE is reachable, transmit, to the UE, a paging message; and

in case that the UE is unreachable, transmit, to the SMF node, a reject message for informing of the estimated maximum wait time and informing that paging for the UE is not to be performed.

14. The AMF node of claim 12, wherein the controller is further configured to:

transmit, to the SMF node, a message about a PDU session generation request; and

receive, from the SMF node, a message about a PDU session generation response generated in relation to whether data buffering is supported.

15. The AMF node of claim 14, wherein the controller is further configured to:

in case that the UE is reachable, transmit, to the UE, a first paging message;

in case that the UE is unreachable and the SMF node supports the data buffering, transmit, to the SMF node, a reject message for informing of the estimated maximum wait time and informing that paging for the UE is not to be performed; and

in case that the UE is unreachable and the SMF node does not support the data buffering, transmit, to the UE, a second paging message.

| Network functions | |
|---|---|
| AMF | Access & Mobility management Function |
| SMF | Session Management function |
| PCF | Policy Control Function |
| UPF | User Plane Function |
| AUSF | Authentication Server Function |
| UDM | User Data Management |
| AF | Application Function |
| NSSF | Network Slice Selection Function |
| NRF | Network Repository Function |
| NEF | Network Exposure Function |

FIG.1

EP 4 465 710 A1

FIG.2A

FIG.2B

310

NWDAF

Nnf

120

Any NF

# FIG.3A

120

Any NF

Nnwdaf

310

NWDAF

# FIG.3B

FIG.4

FIG.5

Participants: UE | (R)AN | AMF | UDM | SMF | UPF | NWDAF | NEF | AF | DN

1. Registration request

2. Generate satellite coverage information (e.g., active duration= 20 minutes, inactive duration=10 hours)

3. N2 message (N2 parameter (satellite coverage information) and registration request)

4. Determine RAT type (e.g., NR satellite (LEO), NR satellite (MEO), NR satellite (GEO), NR satellite (OTHERSAT), etc.)

5. SDM subscription request (SUPI)

6. Determine, based on satellite coverage information and/or UE-related information (e.g., UE behavior characteristic, UE mobility analytics, etc.), periodic registration update timer value

7. Registration acceptance (registration area and periodic registration update timer)

UE behavior characteristic parameter transferring procedure

NG-RAN location reporting procedure
8. Control location reporting

9. Location report (UE location broadcast TAI list, TAI in which UE is geographically located, and last visited TAI)

10a. AF receives UE mobility analytics (satellite coverage area and/or last visited satellite service area) from NWDAF and performs subscription

10b. AF verifies received data and generates UE behavior characteristic parameter (satellite coverage area and/or last visited satellite service area)

11. Parameter provisioning generation/updating/deletion request (UE behavior characteristic parameter)

12. Parameter provisioning generation/updating/deletion response

13. Notify of SDM notification (SUPI and AMF assistive UE behavior characteristic parameter)

UE mobility analytics transferring procedure

14. Subscribe to analytics subscription service (e.g., type of analytics=UE mobility analytics, target of analytics=UE ID and/or UE group ID, and analytics filter information=satellite coverage area and/or last visited satellite service area)

15. Notify of analytics subscription (UE mobility analytics in satellite coverage area and/or last visited satellite service area)

16. Determine, based on satellite coverage information and/or UE-related information (e.g., UE behavior characteristic, UE mobility analytics, etc.), updating of periodic registration update timer value

FIG.6A

| UE | (R)AN | AMF | UDM | SMF | UPF | NWDAF | NEF | AF | DN |
|---|---|---|---|---|---|---|---|---|---|

17a. Update UE configuration (store and restart updated periodic registration update timer)

17b. UE stores and restarts, based on received data, periodic registration update timer

17c. Update UE configuration (result of transferring)

18. PDU session establishment request

19. PDU session establishment acceptance

20. UE becomes CM-IDLE

21. DL data

22. Data notification

23. SMF and/or UPF is possible to include buffering support

24. Data notification (possible to include extended buffering support)

25. Determine whether UE is unreachable because UE is out of satellite coverage

26a. Perform paging (if UE is reachable)

26b-1. Determine, based on satellite coverage information and/or UE-related information and/or UE location reported from RAN, estimated maximum wait time (if UE is unreachable and extended buffering support is indicated)

26b-2. : Reject (if UE is unreachable and extended buffering support is indicated) (estimated maximum wait time)

# FIG.6B

UE | (R)AN | AMF | UDM | SMF | UPF | NWDAF | NEF | AF | DN

1. Registration request

2. Generate satellite coverage information (e.g., active duration=20 minutes, inactive duration=10 hours)

3. N2 message (N2 parameter (satellite coverage information) and registration request)

4. Determine RAT type (e.g., NR satellite (LEO), NR satellite (MEO), NR satellite (GEO), NR satellite (OTHERSAT), etc.)

5. SDM subscription request (SUPI)

6. Determine, based on satellite coverage information and/or UE-related information (e.g., UE behavior characteristic, UE mobility analytics, etc.), periodic registration update timer value

7. Registration acceptance (registration area and periodic registration update timer)

UE behavior characteristic parameter transferring procedure

NG-RAN location reporting procedure
8. Control location reporting

9. Location report (UE location broadcast TAI list, TAI in which UE is geographically located, and last visited TAI)

10a. AF receives UE mobility analytics (satellite coverage area and/or last visited satellite service area) from NWDAF and performs subscription

10b. AF verifies received data and generates UE behavior characteristic parameter (satellite coverage area and/or last visited satellite service area)

11. Parameter provisioning generation/updating/deletion request (UE behavior characteristic parameter)

12. Parameter provisioning generation/updating/deletion response

13. Notify of SDM notification (SUPI and AMF assistive UE behavior characteristic parameter)

UE mobility analytics transferring procedure

14. Subscribe to analytics subscription service (e.g., type of analytics=UE mobility analytics, target of analytics=UE ID and/or UE group ID, and analytics filter information=satellite coverage area and/or last visited satellite service area)

15. Notify of analytics subscription (UE mobility analytics in satellite coverage area and/or last visited satellite service area)

16. Determine, based on satellite coverage information and/or UE-related information (e.g., UE behavior characteristic, UE mobility analytics, etc.), updating of periodic registration update timer value

17a. Update UE configuration (updated periodic registration update timer)

UE stores and restarts, based on received data, periodic registration update timer

17c. Update UE configuration (result of transferring)

18. PDU session establishment request

19. PDU session generation request (satellite coverage information)

20. N4 session establishment request (satellite coverage information)

FIG.7A

| UE | (R)AN | AMF | UDM | SMF | UPF | NWDAF | NEF | AF | DN |
|---|---|---|---|---|---|---|---|---|---|

21. Determine, based on satellite coverage information (e.g., maximum number of satellite coverage periods and maximum storage amount), whether SMF and/or UPF supports buffering

22. PDU session generation response

23. PDU session establishment acceptance

24. UE becomes CM-IDLE

25. DL data

26. Data notification

27. Determine, based on satellite coverage information (e.g., according to measurement of maximum number of satellite coverage periods and possible storage amount), whether SMF and/or UPF supports buffering

28. Data notification (possible to include extended buffering support)

29. Determine whether UE is unreachable because UE is out of satellite coverage

30a. Perform paging (if UE is reachable)

30b-1. Determine, based on satellite coverage information and/or UE-related information and/or UE location reported from RAN, estimated maximum wait time (if UE is unreachable and extended buffering support is indicated)

30b-2. Reject (if UE is unreachable and extended buffering support is indicated) (estimated maximum wait time)

30c. Determine, based on satellite coverage information and/or UE-related information and/or UE location reported from RAN, whether to trigger paging (if UE is unreachable and extended buffering support is not indicated)

30d-a-1. Accept (if paging is determined in stage 30c)

30d-a-2. Perform paging

30d-b. : Reject (if paging is not determined in stage 30c)

# FIG.7B

UE | (R)AN | AMF | UDM | SMF | UPF | NWDAF | NEF | AF | DN

1. Registration request

2. Generate satellite coverage information (e.g., active duration=20 minutes, inactive duration=10 hours, and beam control possibility)

3. N2 message (N2 parameter (satellite coverage information) and registration request)

4. Determine RAT type (e.g., NR satellite (LEO), NR satellite (MEO), NR satellite (GEO), NR satellite (OTHERSAT), etc.)

5. SDM subscription request (SUPI)

6. Determine, based on satellite coverage information and/or UE-related information (e.g., UE behavior characteristic, UE mobility analytics, etc.), periodic registration update timer value

7. Registration acceptance (registration area and periodic registration update timer)

UE behavior characteristic parameter transferring procedure

NG-RAN location reporting procedure
8. Control location reporting

9. Location report (UE location broadcast TAI list, TAI in which UE is geographically located, and last visited TAI)

10a. AF receives UE mobility analytics (satellite coverage area and/or last visited satellite service area) from NWDAF and performs subscription

10b. AF verifies received data and generates UE behavior characteristic parameter (satellite coverage area and/or last visited satellite service area)

11. Parameter provisioning generation/updating/deletion request (UE behavior characteristic parameter)

12. Parameter provisioning generation/updating/deletion response

13. Notify of SDM notification (SUPI and AMF assistive UE behavior characteristic parameter)

UE mobility analytics transferring procedure

14. Subscribe to analytics subscription service (e.g., type of analytics=UE mobility analytics, target of analytics=UE ID and/or UE group ID, and analytics filter information=satellite coverage area and/or last visited satellite service area)

15. Notify of analytics subscription (UE mobility analytics in satellite coverage area and/or last visited satellite service area)

16. Determine, based on satellite coverage information and/or UE-related information (e.g., UE behavior characteristic, UE mobility analytics, etc.), updating of periodic registration update timer value

17a. Update UE configuration (updated periodic registration update timer)

17b. UE stores and restarts, based on received data, periodic registration update timer

17c. Update UE configuration (result of transferring)

18. PDU session establishment request

19. PDU session generation request (satellite coverage information)

20. N4 session establishment request (satellite coverage information)

# FIG.8A

| UE | (R)AN | AMF | UDM | SMF | UPF | NWDAF | NEF | AF | DN |
|----|-------|-----|-----|-----|-----|-------|-----|-----|-----|

21. Determine, based on satellite coverage information (e.g., maximum number of satellite coverage periods and maximum storage amount), whether SMF and/or UPF supports buffering

22. PDU session generation response

23. PDU session establishment acceptance

24. UE becomes CM-IDLE

25. DL data

26. Data notification

27. Determine, based on satellite coverage information (e.g., according to measurement of maximum number of satellite coverage periods and possible storage amount), whether SMF and/or UPF supports buffering

28. Data notification (possible to include extended buffering support)

29. Determine whether UE is unreachable because UE is out of satellite coverage

30a. Perform paging (if UE is reachable)

30b-1. Determine, based on satellite coverage information and/or UE-related information and/or UE location reported from RAN, estimated maximum wait time (if UE is unreachable and extended buffering support is indicated)

30b-2. Reject (if UE is unreachable and extended buffering support is indicated) (estimated maximum wait time)

30c. Determine, based on satellite coverage information and/or UE-related information and/or UE location reported from RAN, whether to trigger paging (if UE is unreachable and extended buffering support is not indicated)

30d-a-1. Accept (if paging is determined in stage 30c)

30d-a-2. Perform paging (if satellite beam can be controlled for each TA) (target TAI list)

30d-a-3. Perform paging (if received, paging is performed only for TAIs included in target TAI list)

30d-b. Reject (if paging is not determined in stage 30c)

# FIG.8B

| INTERNATIONAL SEARCH REPORT | International application No. |
| --- | --- |
| | **PCT/KR2023/001922** |

**A. CLASSIFICATION OF SUBJECT MATTER**

**H04W 60/02**(2009.01)i; **H04W 8/08**(2009.01)i; **H04W 76/10**(2018.01)i; **H04W 68/02**(2009.01)i; **H04W 84/06**(2009.01)i; **H04W 24/02**(2009.01)i; **H04L 41/147**(2022.01)i

According to International Patent Classification (IPC) or to both national classification and IPC

**B. FIELDS SEARCHED**

Minimum documentation searched (classification system followed by classification symbols)

H04W 60/02(2009.01); H04L 12/14(2006.01); H04L 12/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RAN, AMF, NWDAF, 위성(satellite), N2 메시지(message), 단말의 이동성(UE mobility), periodic registration update timer

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | NOKIA et al. Analytics subscription transfer triggered by AMF reallocation. S2-2103255, 3GPP TSG-WG SA2 Meeting #144E. 16 April 2021.<br>See pages 1-29. | 1,7-8,10-11<br>2-6,9,12-15 |
| Y | 3GPP Releases 16 & 17 & Beyond. 5G Americas, White Paper. January 2021.<br>[Retrieved on 08 May 2023]. Retrieved from <https://www.5gamericas.org/wp-content/uploads/2021/01/InDesign-3GPP-Rel-16-17-2021.pdf>.<br>See pages 1-81. | 1,7-8,10-11 |
| A | QUALCOMM INCORPORATED. Discussion of Radio Cells versus Fixed Location Areas. S2-2007690, SA WG2 Meeting #141e. 02 October 2020.<br>See pages 1-11. | 1-15 |
| A | NOKIA et al. KI on UE data collection protection. S3-210112, 3GPP TSG-SA3 Meeting #101-e. 11 January 2021.<br>See page 1. | 1-15 |

| ☑ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 May 2023** | **25 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/001922**

**C.      DOCUMENTS CONSIDERED TO BE RELEVANT**

| Category* | Citation of document, with indication, where appropriate, of the relevant passages | Relevant to claim No. |
|---|---|---|
| A | WO 2021-060840 A1 (SAMSUNG ELECTRONICS CO., LTD.) 01 April 2021 (2021-04-01)<br>See paragraphs [0065]-[0245] and figure 2. | 1-15 |

Form PCT/ISA/210 (second sheet) (July 2022)

**INTERNATIONAL SEARCH REPORT**
Information on patent family members

| International application No. |
| --- |
| **PCT/KR2023/001922** |

| Patent document cited in search report | | | Publication date (day/month/year) | Patent family member(s) | | | Publication date (day/month/year) |
| --- | --- | --- | --- | --- | --- | --- | --- |
| WO | 2021-060840 | A1 | 01 April 2021 | EP | 3997843 | A1 | 18 May 2022 |
| | | | | EP | 3997843 | A4 | 20 July 2022 |
| | | | | KR | 10-2021-0037416 | A | 06 April 2021 |
| | | | | US | 11296959 | B2 | 05 April 2022 |
| | | | | US | 2021-0099367 | A1 | 01 April 2021 |
| | | | | US | 2022-0224612 | A1 | 14 July 2022 |

Form PCT/ISA/210 (patent family annex) (July 2022)